# EUROPEAN PATENT APPLICATION

(11) **EP 4 468 560 A1**
(43) Date of publication of application: **27.11.2024**
(21) Application number: 23759541.8
(22) Date of filing: 23.01.2023
(51) Int. Cl.: H02J 13/00, G01C 21/26, G01C 21/34, G06Q 50/10, B60L 50/60, B60L 58/12, B60L 53/65, B60L 53/67, B60L 53/68, B60L 53/80, G16Y 10/40, G16Y 20/30

(54) **INFORMATION PROCESSING METHOD, INFORMATION PROCESSING DEVICE, AND CONTROL PROGRAM**

(30) Priority: 25.02.2022 JP 2022027683
(71) Applicant: Panasonic Intellectual Property Corporation of America, Torrance, CA 90504 (US)
(72) Inventor: KITA, Atsuyoshi, Kadoma-shi Osaka 571-0057 (JP); TASAKI, Nobuaki, Kadoma-shi Osaka 571-0057 (JP); NAGASHIMA, Tatsumi, Kadoma-shi Osaka 571-0057 (JP); FUCHIKAMI, Tetsuji, Kadoma-shi Osaka 571-0057 (JP)
(74) Representative: Grünecker Patent- und Rechtsanwälte PartG mbB
(86) International application number: PCT/JP2023/001859
(87) International publication number: WO 2023/162535

(57) **Abstract**

A server 2 acquires remaining power information indicating a remaining power amount of a battery 11 being charged at a charging spot 30 and time information indicating a time required for a moving body 1 to receive the battery 11 at the charging spot 30, calculates a travelable range in which the moving body 1 is travelable from the charging spot 30 with the remaining power amount of the battery 11 at a time of reception of the battery 11 at the charging spot 30, based on the remaining power information and the time information, and outputs range information indicating the travelable range.

## Description

### Technical Field

The present disclosure relates to a technique for outputting a travelable range of an electric moving body.

### Background Art

Patent Literature 1 discloses a technique for outputting, to a mobile device of a user, a spot where a portable electrical energy storage device, such as a motorcycle, is collected, charged and distributed within a specific distance from a location of the user and the number of available portable electrical energy storage devices at the spot.

However, the technique of Patent Literature 1 is based on the premise that the portable electrical energy storage device at the spot is lent out in a completely or approximately completely charged state, and does not consider the lending out during the charging.

### Citation List

### Patent Literature

Patent Literature 1: JP 5960260 B2

### Summary of Invention

The present disclosure has been made to solve such a problem, and an object thereof is to provide a technique capable of determining whether a battery being charged at a charging spot can be used.

### Means for Solving the Problem

According to one aspect of the present disclosure, an information processing method includes, by a processor, acquiring remaining power information indicating a remaining power amount of a first battery being charged at a charging spot and time information indicating a time required for an electric moving body to receive the first battery at the charging spot, calculating a travelable range in which the electric moving body is travelable from the charging spot with the remaining power amount of the first battery at a time of reception of the first battery at the charging spot, based on the remaining power information and the time information, and outputting range information indicating the travelable range.

### Brief Description of Drawings

FIG. 1 is a diagram illustrating an overall configuration of an information processing system according to an embodiment of the present disclosure.
FIG. 2 is a diagram illustrating one example of a configuration of a server.
FIG. 3 is a flowchart illustrating one example of processing of the server according to a first embodiment.
FIG. 4 is a view illustrating one example of a map image according to the first embodiment.
FIG. 5 is a flowchart illustrating one example of processing of the server according to a second embodiment.
FIG. 6 is a view illustrating one example of a map image according to the second embodiment.
FIG. 7 is a flowchart illustrating one example of processing of the server according to a third embodiment.
FIG. 8 is a view illustrating one example of a map image according to the third embodiment.
FIG. 9 is a flowchart illustrating one example of processing of the server according to a fourth embodiment.
FIG. 10 is a view illustrating one example of a map image according to the fourth embodiment.
FIG. 11 is a flowchart illustrating one example of processing of the server according to a fifth embodiment.
FIG. 12 is a view illustrating one example of a map image according to the fifth embodiment.
FIG. 13 is a flowchart illustrating one example of processing of the server according to a sixth embodiment.
FIG. 14 is a view illustrating one example of a map image according to the sixth embodiment.
FIG. 15 is a flowchart illustrating one example of processing of the server according to a seventh embodiment.
FIG. 16 is a view illustrating one example of a map image according to the seventh embodiment.
FIG. 17 is a flowchart illustrating one example of processing of the server according to an eighth embodiment.
FIG. 18 is a view illustrating one example of a map image according to the eighth embodiment.
FIG. 19 is a flowchart illustrating one example of processing of the server according to a ninth embodiment.
FIG. 20 is a view illustrating one example of a map image according to the ninth embodiment.
FIG. 21 is a flowchart illustrating one example of processing of the server according to a tenth embodiment.
FIG. 22 is a view illustrating one example of a map image according to the tenth embodiment.

### Description of Embodiments

### (Knowledge Underlying Present Disclosure)

In recent years, an increasing number of services share electric moving bodies, such as an electric motorcycle, an electric bicycle, and an electric kick scooter, that are moved by electric power of a rechargeable battery. However, the electric moving bodies have a shorter cruising distance than an automobile operated by fuel such as gasoline. For this reason, battery stations for providing a plurality of replacement batteries and electric moving bodies are also increasing.

However, the conventional techniques as described in Patent Literature 1 are based on the premise that a battery is lent out in a completely or approximately completely charged state, and does not consider that the battery is lent out during the charging. For this reason, in a case where the demand for replacement is concentrated, the batteries and the electric moving bodies that have been charged to a lendable state might be insufficient in number. In this case, it is necessary to stand by until replacement batteries and electric moving bodies are completely or approximately completely charged, and the replacement cannot be performed quickly.

The present disclosure has been made in order to solve such a problem.

(Configuration 1) According to one aspect of the present disclosure, an information processing method includes, by a processor, acquiring remaining power information indicating a remaining power amount of a first battery being charged at a charging spot and time information indicating a time required for an electric moving body to receive the first battery at the charging spot, calculating a travelable range in which the electric moving body is travelable from the charging spot with the remaining power amount of the first battery at a time of reception of the first battery at the charging spot, based on the remaining power information and the time information, and outputting range information indicating the travelable range.

According to this configuration, the range information indicating the range indicating a range in which the electric moving body is travelable from the charging spot with the remaining power amount of the first battery at a time of receiving the first battery at the charging spot is outputted. Therefore, a user of the electric moving body can determine whether the first battery being charged at the charging spot can be used, with reference to the range information.

(Configuration 2) In the information processing method described in (Configuration 1), in the acquiring, information indicating a current location and a destination of the electric moving body may be further acquired, and the range information may include a map image showing the charging spot, the travelable range, the current location, and the destination.

According to this configuration, the output range information includes a map image showing a charging spot, a travelable range, and a current location and destination of the electric moving body. Therefore, the user of the electric moving body can easily grasp a positional relationship among the charging spot, the travelable range, and the current location and destination of the electric moving body, with reference to the map image. As a result, the user of the electric moving body can easily determine whether the traveling from the current location to the destination via the charging spot is possible.

(Configuration 3) The information processing method described in (Configuration 2) may further include determining a first route from the current location to the charging spot and a second route from the charging spot to the destination, and the map image may further show the first route and the second route.

According to this configuration, the map image shows the first route and the second route. Therefore, the user of the electric moving body can easily grasp a route of traveling from the current location to the destination via the charging spot, with reference to the map image.

(Configuration 4) In the information processing method described in any one of (Configuration 1) to (Configuration 3), the first battery may include one or more batteries, and in the calculating, the travelable range in a case where the electric moving body receives at least a battery having a maximum remaining power amount among the one or more batteries may be calculated.

According to this configuration, the user of the electric moving body can grasp a range in which the electric moving body is travelable from the charging spot in a case where the battery having the maximum remaining power amount is received at the charging spot, with reference to the range information.

(Configuration 5) In the information processing method described in (Configuration 1), in the acquiring, information indicating a remaining power amount of a second battery mounted on the electric moving body and a current location of the electric moving body may be further acquired, the method may further include detecting one or more charging spots where the electric moving body is reachable from the current location, based on the remaining power amount of the second battery and the current location, and acquiring the remaining power information and the time information and calculating the travelable range, for each of the one or more charging spots, and the range information may include a map image showing the one or more charging spots, the travelable range calculated for each of the charging spots, and the current location.

According to this configuration, the map image is output. The map images shows the one or more charging spots where the electric moving body can reach from the current location, the range in which the electric moving body is travelable from each charging spot with the remaining power amount of the first battery at a time of receiving the first battery at each charging spot, and the current location. Therefore, the user of the electric moving body can determine which charging spot the user should receive a battery being charged, with reference to the map image.

(Configuration 6) In the information processing method described in (Configuration 5), in the calculating, a range in which the electric moving body is reachable from the current location may be further calculated based on the remaining power amount of the second battery and the current location, and the map image may further show the range in which the electric moving body is reachable from the current location.

According to this configuration, the output range information includes the map image further showing the range in which the electric moving body can reach from the current location. Therefore, the user of the electric moving body can easily grasp a positional relationship among the range of the reaching from the current location can be performed and the one or more charging spots reachable from the current location, with reference to the map image. As a result, the user of the electric moving body can determine which charging spot the user visits so that the power of the battery of the electric moving body is not depleted.

(Configuration 7) In the information processing method described in (Configuration 5) or (Configuration 6), in the acquiring, information indicating a destination of the electric moving body may be further acquired, and the map image may not show one or more first charging spots for which the travelable range not including the destination is calculated, and the travelable range calculated for each of the first charging spots.

According to this configuration, the map image does not show the one or more first charging spots for which the travelable range not including the destination is calculated and the travelable range calculated for each of the first charging spots. Therefore, the user of the electric moving body can easily determine the charging spot through which the user should pass to reach the destination, with reference to the map image.

(Configuration 8) In the information processing method described in any one of (Configuration 5) to (Configuration 7), the first battery may include one or more batteries, in the acquiring, information indicating a destination of the electric moving body may be further acquired, the method may further include calculating, for each of one or more second charging spots for which the travelable range including the destination is calculated, a number of the batteries having a remaining power amount at a time of reception at each of the second charging spots being equal to or greater than a power amount necessary for traveling of the electric moving body from each of the second charging spots to the destination, based on the remaining power information and the time information acquired for each of the second charging spots, and the map image may further show the number calculated for each of the second charging spots in association with each of the second charging spots.

According to this configuration, the map image shows the number of the batteries having the remaining power amount at the time reception at each of the second charging spots being equal to or greater than the power amount necessary for traveling of the electric moving body from each of the second charging spots to the destination in association with each of second charging spots. Therefore, the user of the electric moving body can easily determine which second charging spot the user can visit to easily receive the battery for reaching the destination, with reference to the map image.

(Configuration 9) In the information processing method described in any one of (Configuration 5) to (Configuration 8), in the acquiring, information indicating a destination of the electric moving body may be further acquired, the method may further include determining a third route from the current location to each of the second charging spots and a fourth route from each of the second charging spots to the destination for each of the one or more second charging spots for which the travelable range including the destination is calculated, and the map image may further show the third route and the fourth route determined for each of the second charging spots.

According to this configuration, the map image show the third route from the current location to each of the second charging spots and the fourth route from each of the second charging spots to the destination. Therefore, the user of the electric moving body can easily grasp a route of traveling from the current location to the destination via each of the second charging spots, with reference to the map image.

(Configuration 10) In the information processing method described in (Configuration 5), the first battery may include one or more batteries, in the acquiring, information indicating a destination of the electric moving body may be further acquired, the method may further include calculating, for each of the one or more charging spots, a standby time between a time the electric moving body reaches each of the charging spots and a time the remaining power amount of at least one of the one or more batteries becomes a power amount necessary for the electric moving body to travel from each of the charging spots to the destination, based on the remaining power information and the time information acquired for each of the charging spots, and the map image may show the standby time calculated for each of the charging spots.

According to this configuration, the map image shows the standby time calculated for each of the charging spots. Therefore, the user of the electric moving body can easily grasp how long the user needs to stand by at each of the charging spots to reach the destination, with reference to the map image.

(Configuration 11) The information processing method described in (Configuration 10), may further include determining a fifth route from the current location to each of the charging spots and a sixth route from each of the charging spots to the destination for each of the one or more charging spots, and calculating a required time required for the electric moving body to travel from the current location to the destination in consideration of the standby time calculated for each of the charging spots, wherein the map image may further show the required time calculated for each of the charging spots.

According to this configuration, the required time required for the electric moving body to travel from the current location to the destination is calculated in consideration of the standby time calculated for each of the charging spots, and the map image shows the required time. Therefore, the user of the electric moving body can easily grasp the time required for reaching the destination via each of the charging spots, with reference to the map image.

(Configuration 12) In the information processing method described in (Configuration 11), the map image may show at least one of a charging spot for which a shortest required time of the required time calculated for each of the one or more charging spots is calculated, and the fifth route and sixth route determined for each of the charging spots.

According to this configuration, the map image shows at least one of the charging spot for which the shortest required time is calculated, and the fifth route and the sixth route determined for each of the charging spots. Therefore, the user of the electric moving body can easily determine that the user can reach the destination in the shortest time via the at least one shown on the map image.

(Configuration 13) In the information processing method described in (Configuration 1), wherein the first battery may include one or more batteries, in the acquiring, information indicating a remaining power amount of a second battery mounted on the electric moving body and a current location and a destination of the electric moving body may be further acquired, in the calculating, the travelable range in a case where the electric moving body receives a third battery having a maximum remaining power amount among the one or more batteries may be calculated, the method may further include generating a map image showing the current location and the destination, (1) detecting one or more charging spots where the electric moving body is reachable from the current location, based on the remaining power amount of the second battery and the current location, (2) acquiring the remaining power information and the time information and calculating the travelable range for each of the one or more charging spots, (3) determining, for each of the one or more charging spots, a seventh route from the current location to each of the charging spots, (4) displaying each of the charging spots, the travelable range calculated for each of the charging spots, and the seventh route determined for each of the charging spots, on the map image, (5) determining, in a case where the travelable range including the destination is calculated in the processing (2), an eighth route from each of one or more second charging spots for which the travelable range including the destination is calculated to the destination, displaying the eighth route determined for each of the second charging spots on the map image, and outputting the map image as the range information, and (6) sequentially executing the processing (1) and the subsequent processing in a case where the travelable range including the destination is not calculated in the processing (2), for at least one of the one or more charging spots, with a remaining power amount of the third battery at a time the electric moving body receives the third battery at the at least one of the charging spots being a remaining power amount of the second battery and the at least one of the charging spots being the current location.

According to this configuration, until the travelable range including the destination is calculated, the processing (1) and the subsequent processing are recursively repeated with the remaining power amount of the third battery at a time the electric moving body receives the third battery at the at least one of the charging spots being the remaining power amount of the second battery, and with the at least one of the charging spots being as the current location. When the travelable range including the destination is calculated, range information including the map image showing the current location, the seventh route from the current location to each of the second charging spots via or without via the one or more charging spots, the eighth route from each of the second charging spots to the destination, and the destination is output.

Therefore, the user of the electric moving body can easily grasp the route for traveling from each of the second charging spots to the destination after the traveling from the current location to each of the second charging spots via or without via the one or more charging spots, with reference to the output map image.

(Configuration 14) In the information processing method described in (Configuration 13), the at least one charging spot may be a charging spot, having a shorter distance to the destination than a distance to the electric moving body, among the one or more charging spots.

According to this configuration, until the travelable range including the destination is calculated, the processing (1) and the subsequent processing are recursively repeated with the remaining power amount of the third battery at a time the electric moving body receives the third battery at the charging spot having the shorter distance to the destination than the distance to the electric moving body being the remaining power amount of the second battery and with the charging spot being as the current location.

Therefore, the user of the electric moving body can easily grasp the route for the traveling from each of the second charging spots to the destination after the traveling from the current location to each of the second charging spots via or without via the one or more charging spots such to approach the destination, with reference to the output map image.

(Configuration 15) The information processing method described in (Configuration 1), may further include calculating, for each of one or more predetermined times, the travelable range in a case where the electric moving body receives the first battery after each predetermined time has elapsed, based on the remaining power information and the time information, wherein the range information may include a map image showing the charging spot and the travelable range, and showing each of the predetermined times and the travelable range calculated for each of the predetermined times in association with each other.

According to this configuration, the charging spot and the travelable range are displayed. Further, the map image showing the travelable range in a case where the electric moving body receives the first battery after each predetermined time has elapsed and each predetermined time in association with each other is output. Therefore, the user of the electric moving body can determine how long the user needs to stand by until the reception of the first battery, with reference to the map image.

(Configuration 16) In the information processing method described in (Configuration 1), the first battery may include a plurality of batteries, in the calculating, for each of the plurality of batteries, a travelable range from the charging spot may be calculated with a remaining power amount of each of the plurality of batteries at a time the electric moving body receives each of the plurality of batteries at the charging spot, and the range information may include a map image showing the charging spot, the travelable range calculated for each of the plurality of batteries, and identification information about each of the plurality of batteries.

According to this configuration, the range information including the map image showing the charging spot, the travelable range calculated for each battery being charged at the charging spot, and the identification information about each battery is output. Therefore, the user of the electric moving body can determine which battery being charged at the charging spot is received by the user, with reference to the map image.

(Configuration 17) According to another aspect of the present disclosure, an information processing method includes, by a processor, acquiring remaining power information indicating a remaining power amount of a first electric moving body being charged at a charging spot and time information indicating a time required for a second electric moving body to be replaced at the charging spot, calculating a travelable range in which the first electric moving body replaced with the second electric moving body at the charging spot is travelable from the charging spot, based on the remaining power information and the time information, and outputting range information indicating the travelable range.

According to this configuration, the range information indicating the range in which the first electric moving body replaced with the second electric moving body at the charging spot is travelable from the charging spot is output. Therefore, the user of the second electric moving body can determine whether the first electric moving body being charged at the charging spot can be used, with reference to the range information.

(Configuration 18) According to another aspect of the present disclosure, an information processing device includes an acquisition unit that acquires remaining power information indicating a remaining power amount of a first battery being charged at a charging spot and time information indicating a time required for an electric moving body to receive the first battery at the charging spot, a calculation unit that calculates a travelable range in which the electric moving body is travelable from the charging spot with the remaining power amount of the first battery at a time of reception of the first battery at the charging spot, based on the remaining power information and the time information, and an output unit that outputs range information indicating the travelable range.

This configuration enables acquiring effects similar to those of the information processing method described above.

(Configuration 19) According to still another aspect of the present disclosure, a control program causes a processor to function as an acquisition unit that acquires remaining power information indicating a remaining power amount of a first battery being charged at a charging spot and time information indicating a time required for an electric moving body to receive the first battery at the charging spot, a calculation unit that calculates a travelable range in which the electric moving body is travelable from the charging spot with the remaining power amount of the first battery at a time of reception of the first battery at the charging spot, based on the remaining power information and the time information, and an output unit that outputs range information indicating the travelable range.

This configuration enables acquiring effects similar to those of the information processing method described above.

The present disclosure can also be implemented as an information processing system that is operated by such a control program. It is needless to say that such a computer program can be distributed via a computer-readable non-transitory recording medium such as a CD-ROM, or via a communication network such as the Internet.

Note that all embodiments described below describe specific examples of the present disclosure. Numerical values, shapes, constituents, steps, order of steps, and the like described in the embodiments below are merely examples, and are not intended to limit the present disclosure. Furthermore, a component that is not described in an independent claim representing the highest concept among components in the embodiments below is described as an arbitrary constituent. In all the embodiments, respective contents can be combined.

### (First embodiment)

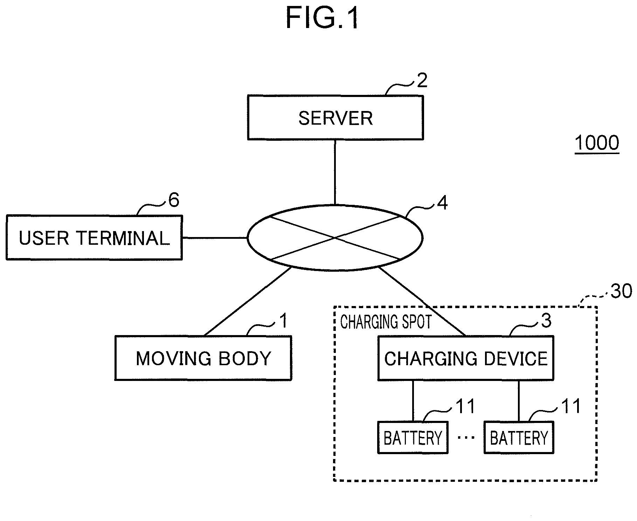

FIG. 1 is a diagram illustrating an overall configuration of an information processing system 1000 according to an embodiment of the present disclosure. The information processing system 1000 includes a server 2 (information processing device), a moving body 1 (electric moving body), a user terminal 6, and a charging device 3.

The server 2 is communicably connected to the moving body 1, the user terminal 6, and the charging device 3 via a network 4. The network 4 is, for example, a wide-area communication network including the Internet and a mobile phone communication network. In FIG. 1, one user terminal 6, one moving body 1, and one charging device 3 are illustrated, but a plurality of these devices may be provided. Each of the user terminal 6, the moving body 1, and the charging device 3 is uniquely specified by a communication address.

The moving body 1 is a moving body that travels using electric power of a battery as a power source. The moving body 1 includes a motor, a battery that supplies electric power to the motor, an inverter that controls the motor, and the like. The moving body 1 is an electric automobile, an electric motorcycle, an electric bicycle, an electric kick scooter, or the like. In the following description the moving body 1 is assumed to be an electric motorcycle. The battery (second battery) mounted on the moving body 1 is, for example, a chargeable and dischargeable secondary battery such as a lithium ion battery or a nickel hydrogen battery. The battery is detachably mounted on the moving body 1, and can be replaced with one or more batteries 11 that have been charged and are being charged at the charging spot 30. Note that the battery 11 being charged means the battery 11 that is not in a fully charged state and is being charged until it is in the fully charged state.

The user terminal 6 is a portable information processing device such as a tablet computer and a smartphone. The user terminal 6 is used by a user of the moving body 1. The user terminal 6 includes a display that displays various information, a touch panel device that receives various operations, and the like.

The charging device 3 is installed in the charging spot 30. Although one charging spot 30 is illustrated in FIG. 1, a plurality of the charging spots 30 may be provided. Further, a plurality of the charging devices 3 may be installed in the charging spot 30. The charging device 3 is configured to be able to simultaneously charge one or more batteries 11 (first batteries) provided at the charging spot 30. The charging device 3 includes a display that displays various information, a touch panel device that receives various operations, and the like.

The moving body 1 periodically transmits information about traveling (hereinafter, traveling information) to the server 2. The traveling information includes current date and time, identification information about the moving body 1, a current location and a traveling speed, a remaining power amount (state of charge (SOC)) of a battery mounted on the moving body 1, and the like. Note that the traveling information may be transmitted to the server 2 via the user terminal 6. In this case, the user terminal 6 and the moving body 1 are connected via near field communication.

The user terminal 6 transmits, to the server 2, information (hereinafter, request information) requesting range information about the charging spot 30. The range information about the charging spot 30 is information indicating a range in which the moving body 1 is travelable from the charging spot 30 with the remaining power amount of the battery 11 at a time of receiving the battery 11 being charged at the charging spot 30.

The request information includes current date and time, identification information about the moving body 1, identification information about the charging spot 30 corresponding to the range information, and the like. The charging spot 30 corresponding to the range information is the charging spot 30 serving as a starting point of the travelable range of the moving body 1 indicated by the range information. The server 2 that has received the request information generates range information and returns the range information to the user terminal 6. The user terminal 6 displays the returned range information on the display.

The charging device 3 periodically transmits, to server 2, information about the batteries 11 that have been charged or are being charged (hereinafter, charging information). The charging information includes a current date and time, identification information about the charging spot 30 where the charging device 3 is installed, identification information about each of the batteries 11, a remaining power amount (state of charge (SOC)), and the like.

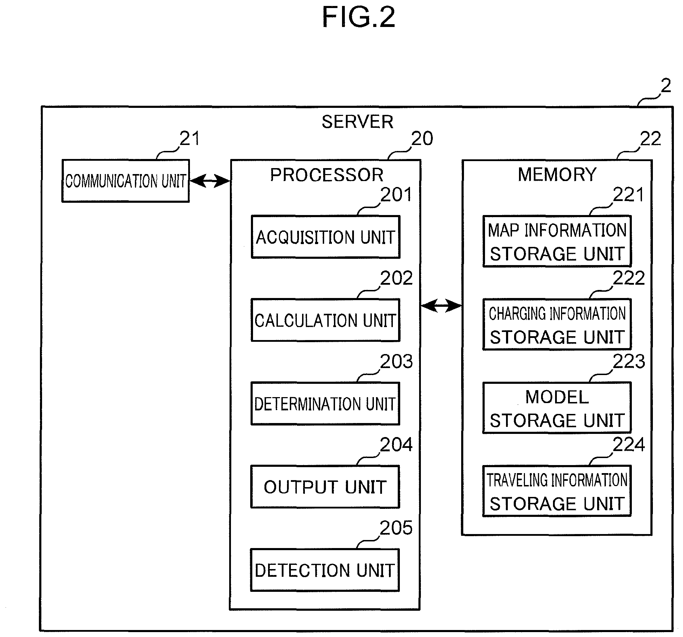

Next, a configuration of the server 2 will be described in detail. FIG. 2 is a diagram illustrating one example of a configuration of the server 2. The server 2 includes a communication unit 21, a memory 22, and a processor 20.

The communication unit 21 is a communication circuit that connects the server 2 to the network 4. The communication unit 21 receives the request information from the user terminal 6 and transmits the range information to the user terminal 6. The communication unit 21 receives traveling information from the moving body 1 or the user terminal 6. The communication unit 21 receives charging information from the charging device 3.

The memory 22 includes, for example, a nonvolatile rewritable semiconductor memory such as a flash memory, a hard disk drive (HDD), or the like. The memory 22 stores a control program executed by the processor 20. The memory 22 includes a map information storage unit 221, a charging information storage unit 222, a model storage unit 223, and a traveling information storage unit 224.

The map information storage unit 221 stores information (hereinafter, map information) about each spot in a predetermined area. Each spot in the area is the charging spot 30, facilities such as parks and schools present in the area, and characteristic spots on roads such as intersections and end points of the roads present in the area. The map information includes a map image indicating a map of the area and information indicating positions of the respective spots in the area. The information indicating the positions of the spots includes latitudes and longitudes of the spots. Note that the information indicating the positions of the spots may further include altitudes of the spots.

The charging information storage unit 222 stores the charging information transmitted by the charging device 3. The charging information storage unit 222 further stores information hereinafter, charging profile) indicating a time-series change in the amount of current supplied to each battery 11 and the remaining power amount of each battery 11 in a period during which each battery 11 having a remaining power amount of 0% is charged into a fully charged state by the charging device 3.

The model storage unit 223 stores learned models used for various types of processing executed by the processor 20.

The traveling information storage unit 224 stores traveling information transmitted by the moving body 1 or the user terminal 6.

The processor 20 includes, for example, a central processing unit. The processor 20 functions as an acquisition unit 201, a calculation unit 202, a determination unit 203, an output unit 204, and a detection unit 205 by executing the control program stored in the memory 22. However, this is an example, and the acquisition unit 201 through the detection unit 205 may be implemented by a dedicated electric circuit such as an application specific integrated circuit (ASIC). In the first embodiment, an example in which the processor 20 functions as the acquisition unit 201, the calculation unit 202, and the output unit 204 will be described.

In a case where the communication unit 21 receives the request information requesting the range information about the charging spot 30, the acquisition unit 201 acquires information (hereinafter, remaining power information) indicating the remaining power amount of each battery 11 being charged at the charging spot 30 corresponding to the range information.

Specifically, the acquisition unit 201 refers to the charging information including the latest current date and time among the charging information including the identification information about the charging spot 30 corresponding to the range information stored in the charging information storage unit 222. The acquisition unit 201 acquires, from the charging information, the remaining power information indicating the remaining power amount of each battery 11 being charged at the charging spot 30 corresponding to the range information.

Furthermore, the acquisition unit 201 acquires time information indicating a time required for the moving body 1 to receive each battery 11 at the charging spot 30.

For example, the acquisition unit 201 acquires, as the time information, information indicating a time required for the moving body 1 to travel to the charging spot 30 corresponding to the range information, based on the current date and time included in the request information.

Specifically, the acquisition unit 201 acquires the traveling information including the current date and time and the identification information about the moving body 1 identical to that of the request information from the traveling information storage unit 224. The acquisition unit 201 acquires information indicating the position of the charging spot 30 with reference to the identification information about the charging spot 30 included in the request information and the map information stored in the map information storage unit 221. The acquisition unit 201 divides a straight distance between the position of the charging spot 30 and the current location of the moving body 1 included in the traveling information by a predetermined average traveling speed of the moving body 1. That is, the result of the division indicates a time required for the moving body 1 to travel to the charging spot 30, based on the current date and time included in the request information. The acquisition unit 201 acquires information indicating the result of the division as time information.

Note that the acquisition unit 201 may acquire the time information with a method different from the above example. For example, in the operation for transmitting the request information in the user terminal 6 to the server 2, the date and time when the battery 11 is scheduled to be received at the charging spot 30 may be input. In a case where the operation is performed, the user terminal 6 may include the scheduled date and time in the request information and transmit the request information to the server 2. Then, the acquisition unit 201 may acquire, as the time information, information indicating a time between the current date and time included in the request information and the scheduled date and time included in the request information.

Alternatively, a learned model that has learned the relationship between a geographical feature amount between two spots in the predetermined area and the traveling time of the moving body 1 between the two spots may be stored in the model storage unit 223. The geographical feature amount between two spots is, for example, a distance and an altitude difference of the shortest route between the two spots. The same applies to the following description.

In this case, the acquisition unit 201 may calculate the geographical feature amount between the current location of the moving body 1 included in the traveling information and the charging spot 30, based on the map information stored in the map information storage unit 221. Then, the acquisition unit 201 may input the geographical feature amount to the above-described learned model, so that the information indicating the traveling time output from the learned model may be acquired as the time information.

Based on the remaining power information and the time information acquired by the acquisition unit 201, the calculation unit 202 calculates a range in which the moving body 1 is travelable from the charging spot 30 with the remaining power amount of the battery 11 at a time the moving body 1 receives the battery 11 at the charging spot 30.

Specifically, the calculation unit 202 specifies the battery 11(hereinafter, the maximum battery (third battery)) having the maximum remaining power amount among the one or more batteries 11 being charged at the charging spot 30, with reference to the remaining power information. The calculation unit 202 calculates the remaining power amount of the maximum battery at a time the battery having the maximum remaining power amount indicated by the remaining power information is further charged for the time indicated by the time information, with reference to the charging profile stored in the charging information storage unit 222. The calculation unit 202 calculates the calculated remaining power amount as the remaining power amount (hereinafter, remaining power amount at a time of reception) of the maximum battery at a time the moving body 1 receives the maximum battery at the charging spot 30.

Next, the calculation unit 202 acquires a traveling range calculation model stored in the model storage unit 223. The traveling range calculation model is a learned model that has learned the relationship between the geographical feature amount between two spots and the power amount necessary for the moving body 1 to travel between the two spots.

Based on the map information stored in the map information storage unit 221, the calculation unit 202 sequentially calculates geographical feature amounts between the charging spot 30 and the spots of the area indicated by the map information. The calculation unit 202 sequentially inputs the calculated geographic feature amounts to the traveling range calculation model. As a result, the calculation unit 202 sequentially calculates the power amount of sequentially output from the traveling range calculation model as the power amount necessary for the moving body 1 to travel from the charging spot 30 to each spot in the area. Hereinafter, the power amount necessary for the moving body 1 to travel from the charging spot 30 to a certain spot in the area is described as a necessary power amount corresponding to the spot.

The calculation unit 202 compares the necessary power amount corresponding to each spot sequentially calculated using the traveling range calculation model with the remaining power amount at the time of reception. The calculation unit 202 calculates a spot where the required power amount equal to or less than the remaining power amount at the time of reception is calculated as a spot within the travelable range of the moving body 1. Then, the calculation unit 202 calculates, as the travelable range, a minimum elliptical region that can surround all the spots calculated as spots within the travelable range of the moving body 1. Note that the present disclosure is not limited thereto, and the calculation unit 202 may calculate, as the travelable range, an area having another predetermined shape such as a minimum rectangular area capable of surrounding all the spots calculated as spots within the travelable range of the moving body 1.

The method for calculating the travelable range by the calculation unit 202 is not limited to the above example. For example, the calculation unit 202 may calculate a product of a predetermined average traveling speed of the moving body 1 and the time indicated by the time information, and calculate, as the travelable range, a region of a circle whose center is the charging spot 30 and radius is the product.

The output unit 204 generates range information indicating the travelable range calculated by the calculation unit 202, and transmits (outputs) the range information to the user terminal 6 using the communication unit 21. The range information includes a map image showing the charging spot 30, the travelable range calculated by the calculation unit 202, and the current location of the moving body 1.

Specifically, the output unit 204 acquires a map image including the current location and the travelable range of the moving body 1 from the map information storage unit 221. The output unit 204 superimposes to display an image indicating the moving body 1 on a position corresponding to the current location of the moving body 1 in the acquired map image. Further, the output unit 204 superimposes an image indicating the travelable range on a position corresponding to the travelable range in the map image. Further, the output unit 204 superimposes an image indicating the charging spot 30 on a position corresponding to the charging spot 30 in the map image.

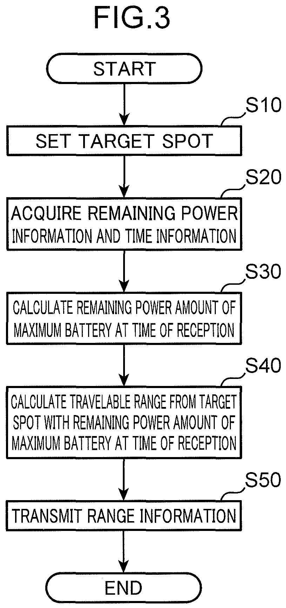

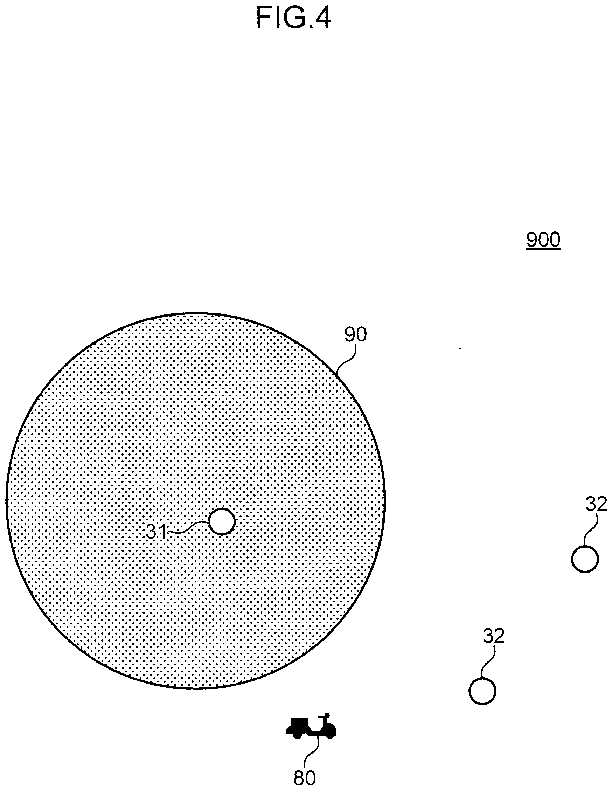

The configuration of the server 2 has been described above. Subsequently, processing of the server 2 will be described. FIG. 3 is a flowchart illustrating one example of the processing of the server 2 according to the first embodiment. When the communication unit 21 receives the request information from the user terminal 6, the processor 20 starts the processing illustrated in FIG. 4.

In step S10, the acquisition unit 201 acquires the identification information about the charging spot 30 included in the request information as described above. The acquisition unit 201 sets the charging spot 30 identified by the identification information as a charging spot (hereinafter, target spot) corresponding to the range information.

In step S20, the calculation unit 202 acquires the remaining power information and the time information about the target spot as described above. The remaining power information about the target spot is information indicating the remaining power amount of each battery 11 being charged at the target spot. The time information about the target spot is information indicating the time required for the moving body 1 to receive each battery 11 at the target spot.

In step S30, as described above, the calculation unit 202 calculates the remaining power amount at the time of reception, which is the remaining power amount of the maximum battery at a time the moving body 1 receives the maximum battery at the target spot, based on the remaining power information and the time information acquired in step S20.

In step S40, the calculation unit 202 calculates the range in which the moving body 1 is travelable from the target spot with the remaining power amount at the time of reception calculated in step S30 as described above.

In step S50, the output unit 204 generates the range information indicating the travelable range calculated in step S40 as described above, and transmits the range information to the user terminal 6 using the communication unit 21.

Specifically, in step S50, the output unit 204 generates, as the range information, a map image showing the current location of the moving body 1, the target spot, and the range in which the moving body 1 is travelable from the target spot with the remaining power amount at the time of reception calculated in step S40. The output unit 204 transmits the range information to the user terminal 6. The user terminal 6 displays the map image, which is the range information returned from the server 2, on the display.

FIG. 4 is a view illustrating one example of a map image 900 according to the first embodiment. For example, in step S50, the map image 900 illustrated in FIG. 4 is generated. The map image 900 illustrates an example in which an image 80 (hereinafter, a current location image 80) indicating the current location of the moving body 1, an image 31 (hereinafter, a target spot image 31) indicating the target spot, and an image 90 (hereinafter, a traveling range image 90) indicating a range in which the traveling from the target spot is enabled with the remaining power amount at the time of reception calculated in step S40 are displayed in a superimposed manner on a map image of a region including the target location and the current location of the moving body 1. Note that the image 32 included in the map image 900 indicates the charging spot 30 different from the target spot.

As described above, according to the first embodiment, the user of the moving body 1 can grasp that the moving body 1 is travelable within the range indicated by the traveling range image 90 in a case of receiving the maximum battery being charged at the target spot with reference to the map image 900. As a result, the user can determine whether the maximum battery being charged at the target spot can be used.

### (Second embodiment)

In the first embodiment, the range in which the moving body 1 is travelable from the target spot with the remaining power amount of the maximum battery at a time of receiving the maximum battery being charged at the target spot and the current location of the moving body 1 are displayed. In the second embodiment, the processor 20 further functions as the determination unit 203, and further displays the destination of the moving body 1 and the traveling route from the current location to the destination. Hereinafter, the second embodiment will be described in detail. Note that in the second embodiment, the same components as those in the first embodiment are denoted by the same reference numerals, and description thereof will be omitted.

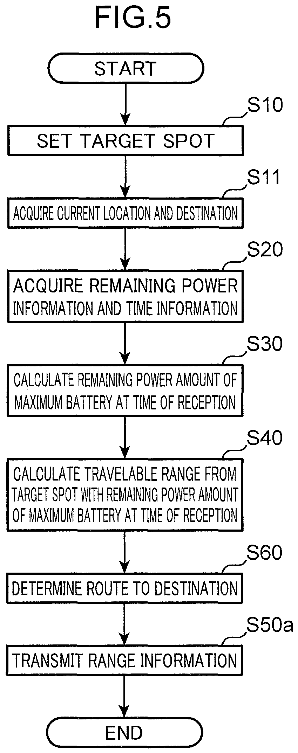

FIG. 5 is a flowchart illustrating one example of processing of the server 2 according to the second embodiment. In the second embodiment, after step S10, in step S11, the acquisition unit 201 acquires information indicating the current location and the destination of the moving body 1.

Specifically, the acquisition unit 201 acquires the traveling information including the current date and time and the identification information about the moving body 1 identical to that of the request information received by the communication unit 21, from the traveling information storage unit 224. The acquisition unit 201 acquires the current location of the moving body 1 included in the traveling information.

In the second embodiment, in the operation for transmitting the request information in the user terminal 6 to the server 2, the destination of the moving body 1 is input by the user. When the operation is performed, the user terminal 6 puts the input destination into the request information and transmits the request information to the server 2. The acquisition unit 201 acquires the destination of the moving body 1 based on the request information received by the communication unit 21.

After step S40, in step S60, the determination unit 203 determines a route (first route) from the current location acquired in step S11 to the target spot and a route (second route) from the target spot to the destination acquired in step S11.

Specifically, in step S60, the determination unit 203 with reference to the map information stored in the map information storage unit 221, and determines the shortest route from the current location to the target spot and the shortest route from the target spot to the destination using, for example, a publicly-known route searching algorithm. The publicly-known route searching algorithm is, for example, the Dijkstra method. The shortest route is, for example, a route with the minimum distance.

Note that the shortest route is not limited to this, and may be, for example, a route in which the integrated value of the altitude differences during traveling is minimized or a route in which the number of intersections during traveling is minimized so that the power consumption amount of the battery 11 is minimized.

Alternatively, switching may be performed as to whether to determine a route with the minimum distance or a route with the minimum power consumption of the battery, according to the remaining power amount of the battery of the moving body 1. Specifically, as in step S11, the determination unit 203 acquires the remaining power amount of the battery of the moving body 1 from the traveling information including the current date and time and the identification information about the moving body 1 identical to the request information received by the communication unit 21. The determination unit 203 determines a route with the shortest distance when the remaining power amount is equal to or greater than a predetermined threshold, and determines a route with the minimum battery power consumption when the remaining power amount is less than the threshold.

After step S60, in step S50a, the output unit 204 performs processing similar to that in step S50. However, the output unit 204 further superimposes an image indicating the destination of the moving body 1 on a position corresponding to the destination of the moving body 1 on the map image 900 (FIG. 4) generated as the range information. Further, the output unit 204 superimposes an image indicating the route on a position corresponding to the route determined in step S60 in the map image.

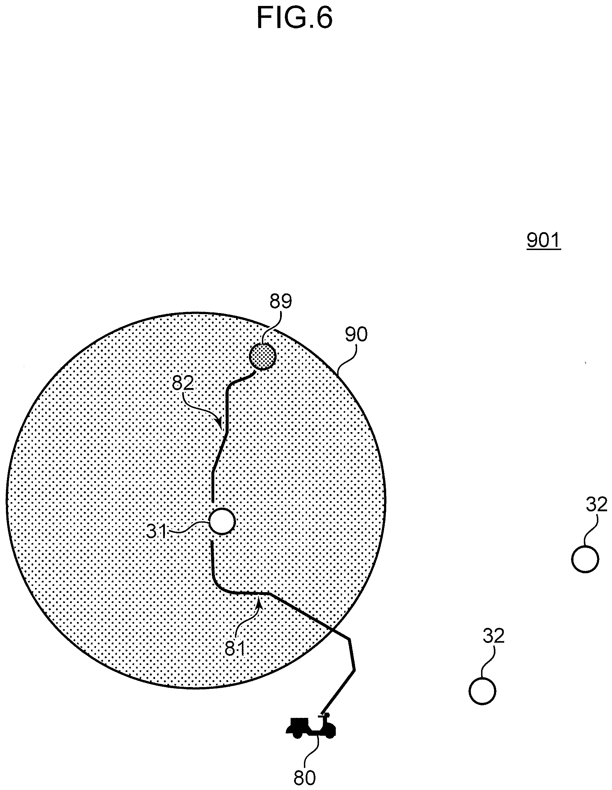

FIG. 6 is a view illustrating one example of a map image 901 according to the second embodiment. For example, in step S50a, the map image 901 illustrated in FIG. 6 is generated. The map image 901 illustrates an example in which an image 89 (hereinafter, a destination image 89) indicating a destination of the moving body 1, an image 81 indicating a route from the current location determined in step S60 to the target spot, and an image 82 indicating a route from the target spot determined in step S60 to the destination are further superimposed on the map image 900 (FIG. 4).

As described above, according to the second embodiment, the user of the moving body 1 can easily determine whether traveling from the current location to the destination via the target spot is possible, with reference to the map image 901. In addition, the user can easily grasp a route of traveling from the current location to the destination via the target spot.

### (Third embodiment)

In the first embodiment, the range in which the moving body 1 is travelable from the target spot with the remaining power amount of the maximum battery at a time of receiving the maximum battery at the target spot and the current location of the moving body 1 are displayed. In the third embodiment, the range in which the moving body 1 is travelable from the target spot with the remaining power amount of the maximum battery at a time of receiving the maximum battery is displayed after waiting at the target spot or on the way to the target spot for a predetermined time. Hereinafter, the third embodiment will be described in detail. Note that in the third embodiment, the same components as those in the first embodiment are denoted by the same reference numerals, and description thereof will be omitted.

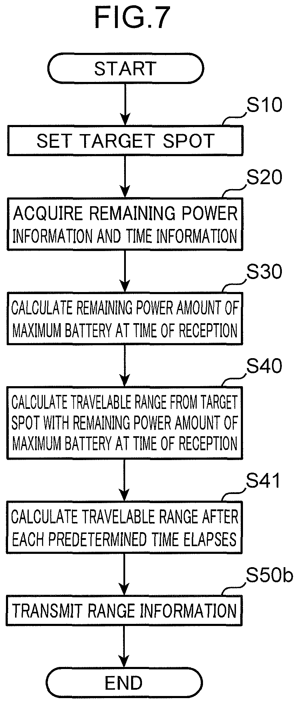

FIG. 7 is a flowchart illustrating one example of processing of the server 2 according to the third embodiment. In the third embodiment, after step S40, in step S41, the calculation unit 202 calculates, for each of one or more predetermined times, the travelable range in a case where the moving body 1 receives the maximum battery after each predetermined time has further elapsed, based on the remaining power information and the time information acquired in step S10. Hereinafter, the travelable range in the case where the moving body 1 receives the maximum battery after each predetermined time has elapsed is described as the travelable range after each predetermined time.

Specifically, in step S41, the calculation unit 202 acquire the remaining power amount of the maximum battery with reference to the remaining power information acquired in step S10. The calculation unit 202 calculates the remaining power amount of the maximum battery at a time the battery having the maximum remaining power amount is further charged for a time obtained by adding each predetermined time to the time indicated by the time information, with reference to the charging profile stored in the charging information storage unit 222. The calculation unit 202 calculates the calculated remaining power amount as the remaining power amount (hereinafter, a post-standby remaining power amount) of the maximum battery at the time the moving body 1 receives the maximum battery after each predetermined time has elapsed.

Then, as in the first embodiment, the calculation unit 202 compares the necessary power amount corresponding to each spot sequentially calculated using the traveling range calculation model with the post remaining power amount after standby. The calculation unit 202 calculates a spot where a required power amount equal to or less than the remaining power amount after standby as a spot within the travelable range of the moving body 1 after each predetermined time has elapsed. Then, the calculation unit 202 calculates, as the travelable range after each predetermined time, a minimum elliptical area or an area having another predetermined shape capable of surrounding all the spots calculated as the spots within the travelable range of the moving body 1 after each predetermined time has elapsed.

The method for calculating the travelable range after each predetermined time by the calculation unit 202 is not limited to the above example. For example, the calculation unit 202 may calculate a product of a time obtained by adding each predetermined time to the time indicated by the time information and the average traveling speed of the moving body 1, and calculate, as the travelable range after each predetermined time, a region of a circle having a center being the target spot and having a radius being the product.

In step S50b, the output unit 204 executes processing similar to that in step S50. However, the output unit 204 further superimposes an image indicating the travelable range after each predetermined time on a position corresponding to the travelable range after each predetermined time calculated in step S41 in the map image 900 (FIG. 4) generated as the range information. Further, the output unit 204 superimposes an image indicating that the standby time is each predetermined time in association with the image indicating the travelable range after each predetermined time.

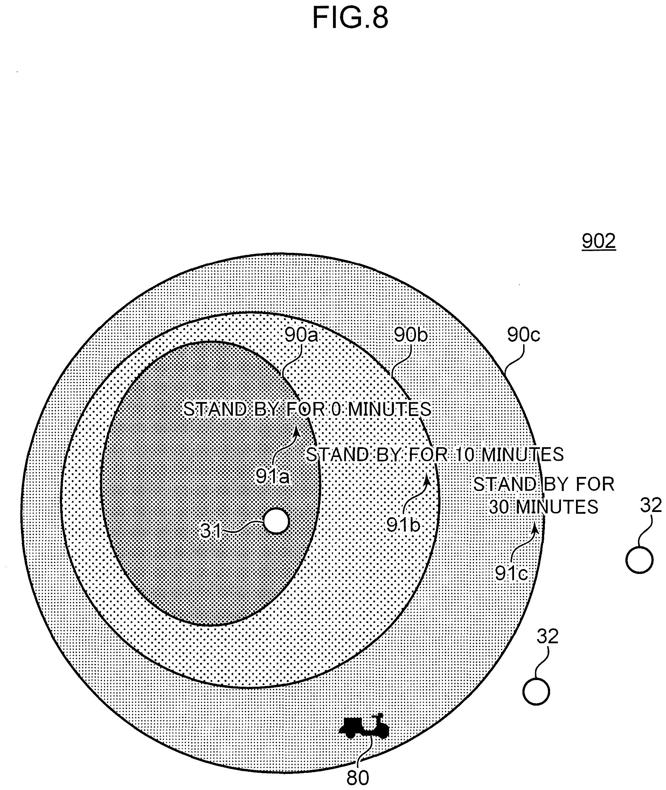

FIG. 8 is a view illustrating one example of a map image 902 according to the third embodiment. For example, in step S50b, the map image 902 illustrated in FIG. 8 is generated. The map image 902 illustrates an example in which the current location image 80, the target spot image 31, and a traveling range image 90a are superimposed on a map image of a region including the target spot and the current location of the moving body 1. The map image 902 further shows an image 90b indicating the travelable range after 10 minutes and an image 91b indicating that the standby time is 10 minutes are in association with each other. The map image 902 further shows an image 90c indicating the travelable range after 30 minutes and an image 91c indicating that the standby time is 30 minutes are in association with each other. Note that the map image 902 shows an image 91a indicating that the standby time is 0 minutes in association with the traveling range image 90a.

As described above, according to the third embodiment, the user of the moving body 1 can grasp that the moving body 1 is travelable within the range indicated by the traveling range image 90a in a case of receiving the maximum battery being charged without standing by at the target spot, with reference to the map image 902. Further, in a case where the user receives the maximum battery being charged after standing by for 10 minutes at the target spot, the user can grasp that the moving body 1 is travelable within the range indicated by the traveling range image 90b. Further, in a case where the user receives the maximum battery being charged after standing by for 30 minutes at the target spot, the user can grasp that the moving body 1 is travelable within the range indicated by the traveling range image 90c. As a result, the user can determine how long the user needs to stand by at the target spot.

### (Fourth embodiment)

In the first embodiment, the range in which the moving body 1 is travelable from the target spot with the remaining power amount of the maximum battery at a time of receiving the maximum battery at the target spot and the current location of the moving body 1 are displayed. In the fourth embodiment, a range in which the moving body 1 is travelable from the target spot with the remaining power amount of each battery 11 at the time of receiving each of the one or more batteries 11 at the target spot is displayed. Hereinafter, the fourth embodiment will be described in detail. Note that in the fourth embodiment, the same components as those in the first embodiment are denoted by the same reference numerals, and description thereof will be omitted.

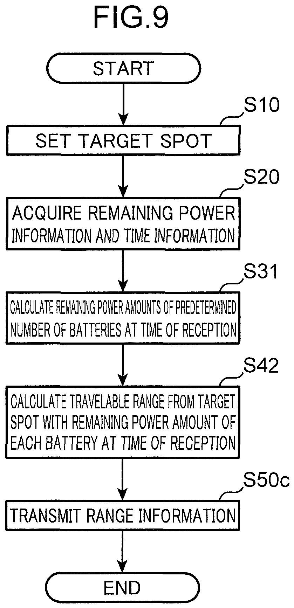

FIG. 9 is a flowchart illustrating one example of processing of the server 2 according to the third embodiment. In the fourth embodiment, after step S20, in step S31, the calculation unit 202 calculates the remaining power amount of each battery 11 at a time the moving body 1 receives each battery 11 at the target spot for each of the predetermined number of batteries 11 being charged at the target spot, as in step S30.

Then, in step S42, as in step S40, the calculation unit 202 calculates, for each of the predetermined number of the batteries 11 being charged at the target spot, a range in which the moving body 1 is travelable from the target spot with the remaining power amount of each battery 11 at the time the moving body 1 receives each battery 11, the remaining power amount being calculated in step S31. Hereinafter, the travelable range is described as the travelable range by each battery 11.

In step S50c, the output unit 204 executes processing similar to that in step S50. However, the output unit 204 superimposes an image indicating the travelable range by each battery 11 on a position corresponding to the travelable range by each battery 11, the range being calculated in step S42, in the map image 900 (FIG. 4) generated as the range information. Further, the output unit 204 superimposes an image indicating identification information of each battery 11 in association with an image indicating the travelable range by each battery 11. Note that the output unit 204 acquires the identification information about each battery 11 being charged from the charging information including the identification information about the target spot and the latest current date and time stored in the charging information storage unit 222.

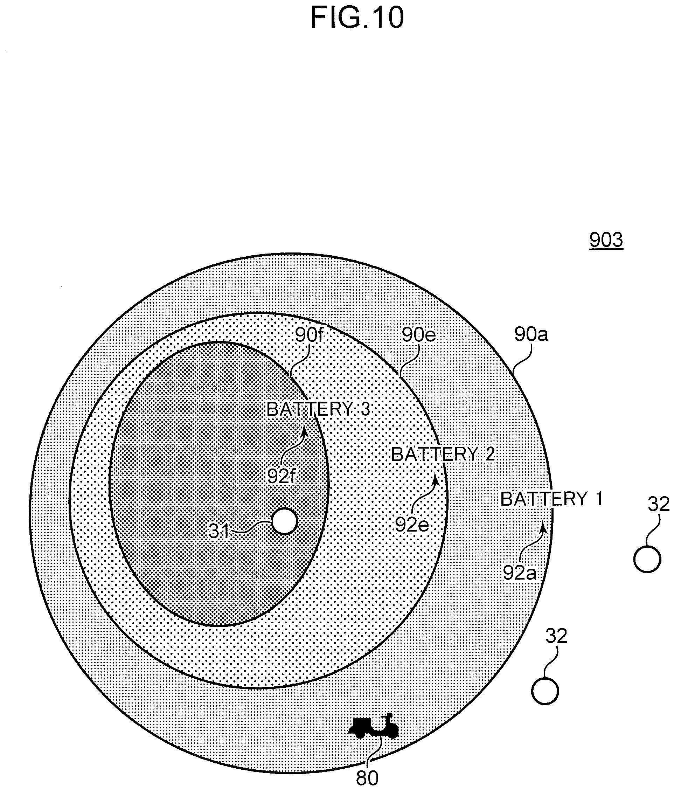

FIG. 10 is a view illustrating one example of a map image 903 according to the fourth embodiment. For example, in step S50c, the map image 903 illustrated in FIG. 10 is generated. The map image 903 illustrates an example in which the current location image 80, the target spot image 31, and the traveling range image 90a are superimposed on the map image of a region including the target spot and the current location of the moving body 1. The map image 903 further shows an image 90e indicating the travelable range by the battery 11 identified by the identification information "BATTERY 2" and an image 92e indicating the identification information "battery 2" in association with each other. The map image 903 further shows an image 90f indicating the travelable range by the battery 11 identified by the identification information "battery 3" and an image 92f indicating the identification information "BATTERY 3" in association with each other. Note that the map image 903 shows an image 92a of the maximum battery indicating the identification information "BATTERY 1" in association with the traveling range image 90a.

As described above, according to the fourth embodiment, the user of the moving body 1 can grasp, for example, that the moving body 1 is travelable within the range indicated by the traveling range image 90a in a case of receiving the battery 11 indicated by the identification information "battery 1" being charged at the target spot, with reference to the map image 903. Further, in a case of receiving the battery 11 of the identification information "battery 2", the user can grasp that the moving body 1 is travelable within the range indicated by the traveling range image 90e. As a result, the user can determine which battery 11 should be received at the target spot.

### (Fifth embodiment)

In the first to fourth embodiments, the charging spot 30 identified by the identification information about the charging spot 30 transmitted from the user terminal 6 is set as the target spot, and the travelable range of the target spot is displayed. In a fifth embodiment, the travelable range for each target spot is displayed using each of one or more charging spots 30 that the moving body 1 can reach from the current location as the target spot. In the fifth embodiment, the processor 20 further functions as the detection unit 205. Hereinafter, the fifth embodiment will be described in detail. Note that in the fifth embodiment, the same components as those in the first embodiment are denoted by the same reference numerals, and description thereof will be omitted.

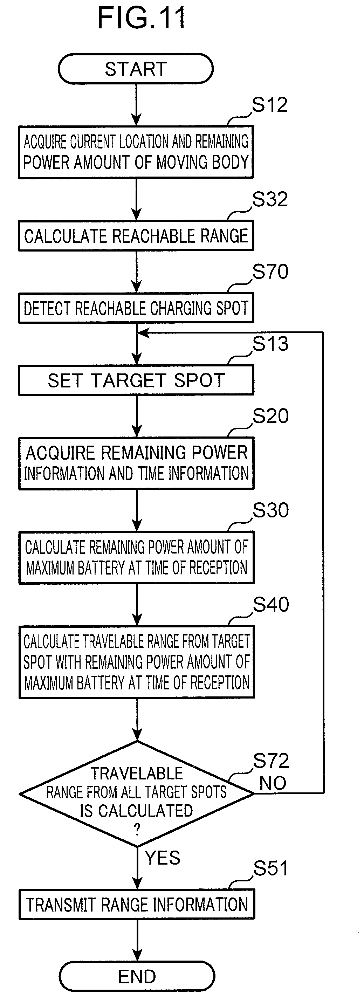

FIG. 11 is a flowchart illustrating one example of processing of the server 2 according to the fifth embodiment. In the fifth embodiment, the user terminal 6 transmits, to the server 2, request information for requesting range information about an unspecified charging spot 30. The request information is obtained by removing the identification information about the charging spot 30 as the target spot from the request information of the first to fourth embodiments. When the communication unit 21 receives the request information, the processor 20 starts the processing illustrated in FIG. 11.

First, in step S12, the acquisition unit 201 acquires the current location of the moving body 1 and the remaining power amount of a battery mounted on the moving body 1. Specifically, the acquisition unit 201 acquires the traveling information including the current date and time and the identification information about the moving body 1 identical to that of the request information received by the communication unit 21, from the traveling information storage unit 224. The acquisition unit 201 acquires the current location of the moving body 1 and the remaining power amount of the battery mounted on the moving body 1 included in the traveling information.

Next, in step S32, the calculation unit 202 calculates a range in which the moving body 1 can reach from the current location with the remaining power amount acquired in step S12.

Specifically, the calculation unit 202 acquires the traveling range calculation model stored in the model storage unit 223. Based on the map information stored in the map information storage unit 221, the calculation unit 202 sequentially calculates geographical feature amounts, acquired in step S12, between the current location of the moving body 1 and each spot within a predetermined distance from area current location. The predetermined distance is a distance determined based on an experimental value or the like. For example, the predetermined distance is determined to be a distance longer than a distance in which the moving body 1 is travelable with the power of the charged battery 11.

The calculation unit 202 sequentially inputs the calculated geographic feature amounts to the traveling range calculation model. As a result, the calculation unit 202 sequentially calculates the power amounts sequentially output from the traveling range calculation model, as the power amount necessary for the moving body 1 to travel from the current location to each spot within the predetermined distance. Hereinafter, the power amount necessary for the moving body 1 to travel from the current location to a certain spot within the predetermined distance is described as a necessary power amount corresponding to the spot.

The calculation unit 202 compares the necessary power amount corresponding to each spot sequentially calculated using the traveling range calculation model with the remaining power amount acquired in step S12. The calculation unit 202 calculates the spot where the required power amount equal to or less than the remaining power amount acquired in step S12 is calculated as a spot within a reachable range of the moving body 1. Then, the calculation unit 202 calculates, as the range in which the moving body 1 is reachable from the current location, a minimum elliptical area capable of surrounding all the spots calculated as spots within the reachable range of the moving body 1. Note that the present disclosure is not limited thereto, and the calculation unit 202 may calculate, as the range in which the moving body 1 is reachable from the current location, an area having another predetermined shape such as a minimum rectangular area capable of surrounding all the spots calculated as the spots within the reachable range of the moving body 1.

The method for calculating the reachable range using the calculation unit 202 is not limited to the above example. For example, the calculation unit 202 may calculate a product of a predetermined traveling distance per unit power amount of the moving body 1 and the remaining power amount acquired in step S12. Then, the calculation unit 202 may calculate a circle area having a center being the current location and a radius being the product, as the reachable range.

Next, in step S70, the detection unit 205 detects the one or more charging spots 30 included in the reachable range calculated in step S32. Specifically, the detection unit 205 detects the one or more charging spots 30 within the reachable range calculated in step S32, with reference to the map information stored in the map information storage unit 221.

After step S70, in step S13, the acquisition unit 201 sequentially sets each of the one or more charging spots 30 detected in step S70, as a target spot. Then, for each target spot set in step S13, the processing in steps S20 to S40 are performed as in the first embodiment. As a result, the travelable range for each target spot is calculated. The travelable range for each target spot is a range in which the moving body 1 is travelable from each target spot with the remaining power amount of the maximum battery at the time the moving body 1 receives the maximum battery at each target spot.

All the charging spots 30 detected in step S70 are set as target spots, and the processing in and after step S13 is repeated until the calculation of the travelable range is completed for all the target spots (NO in step S72). When the calculation of the travelable range is completed for all the target spots (YES in step S72), step S51 is performed.

In step S51, the output unit 204 generates the range information indicating the travelable range calculated in step S40, and transmits the range information to the user terminal 6 using the communication unit 21.

Specifically, in step S51, the output unit 204 generates, as the range information, a map image showing the current location of the moving body 1, the reachable range calculated in step S32, the one or more charging spots 30 detected in step S70 and set as the target spots in step S13, and the travelable range for each target spot, the travelable range being calculated in step S40. The output unit 204 transmits the range information to the user terminal 6. The user terminal 6 displays the map image, which is the range information returned from the server 2, on the display.

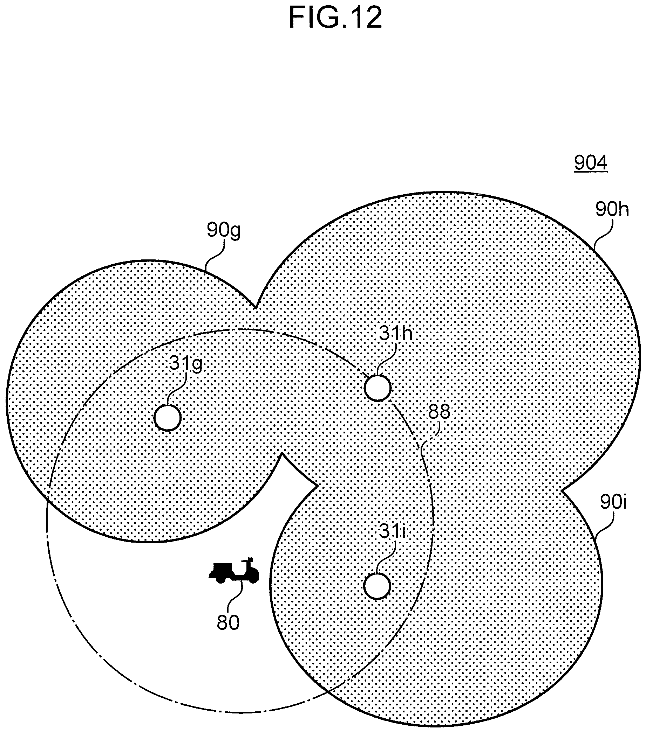

FIG. 12 is a view illustrating one example of a map image 904 according to the fifth embodiment. For example, in step S51, the map image 904 illustrated in FIG. 12 is generated. The map image 904 is an example in which the current location image 80, and a map image of an area including the current location of the moving body 1 and the one or more charging spots 30 detected in step S70 and set as the target spot in step S13 are displayed in a superimposed manner. Further, an image 88 (hereinafter, a coverage image 88) indicating the reachable range calculated in step S32, and the map image 904 are displayed in a superimposed manner. Further, the map image 904 shows target spot images 31g, 31h, and 31i indicating the target spots, and traveling range images 90g, 90h, and 90i indicating the travelable ranges for the target spots, the travelable ranges being calculated in step S40 in a superimposed manner.

As described above, according to the fifth embodiment, the user of the moving body 1 can grasp the positional relationship among the range in which the moving body 1 is reachable from the current location, the one or more charging spots 30 within the range, the range in which the moving body 1 is travelable from each charging spot 30 with the remaining power amount of the maximum battery at a time the moving body 1 receives the maximum battery at each charging spot 30, and the current location, with reference to the map image 904. As a result, the user can determine which charging spot 30 the user should visit to receive the maximum battery so that the power of the battery of the moving body 1 is not depleted.

Note that, in step S51 in the fifth embodiment, the output unit 204 may hide the coverage image 88 indicating the reachable range calculated in step S32 on the map image 904.

### (Sixth embodiment)

In the fifth embodiment, each of the one or more charging spots 30 where the moving body 1 is reachable from the current location is set as the target spot, and the travelable range for each target spot is displayed. In the sixth embodiment, the travelable range not including the destination of the moving body 1 is hidden in the travelable range for each of the one or more target spots. Hereinafter, the sixth embodiment will be described in detail. Note that in the sixth embodiment, the same components as those in the fifth embodiment are denoted by the same reference numerals, and description thereof will be omitted.

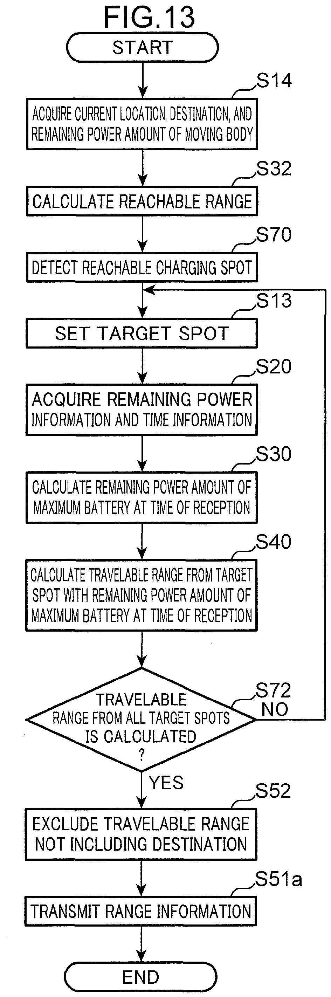

FIG. 13 is a flowchart illustrating one example of processing of the server 2 according to the sixth embodiment. In the sixth embodiment, when the communication unit 21 receives the request information, the processor 20 starts the processing illustrated in FIG. 13.

First, in step S14, the acquisition unit 201 acquires information indicting the current location of the moving body 1 and the remaining power amount of a battery mounted on the moving body 1 as in step S12 (FIG. 11). Furthermore, the acquisition unit 201 acquires information indicating the destination of the moving body 1 as in step S11 (FIG. 5).

Thereafter, all the charging spots 30 detected in step S70 are set as target spots, and the processing in step S52 is performed when the calculation of the travelable range is completed for all the target spots (YES in step S72).

In step S52, the output unit 204 sets information indicating one or more target spots (hereinafter, first target spots (first charging spots)) for which the travelable range not including the destination acquired in step S14 is calculated in step S40 and the travelable range calculated for each first target spot, as information (hereinafter, exclusion information) to be excluded from the range information.

Next, in step S51a, the output unit 204 performs processing similar to that in step S51 (FIG. 11). However, the output unit 204 hides the image indicating the one or more first target spots and the travelable range calculated for each first target spot indicated by the exclusion information set in step S73, on the map image 904 (FIG. 12) generated as the range information. Further, the output unit 204 superimposes an image indicating the destination of the moving body 1 on a position corresponding to the destination of the moving body 1, the position being acquired in step S14 in the map image.

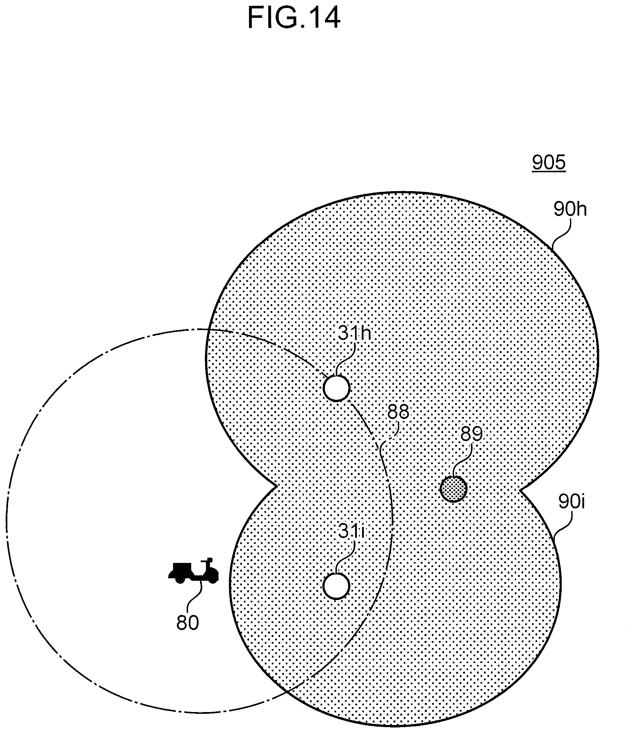

FIG. 14 is a view illustrating one example of a map image 905 according to the sixth embodiment. For example, in step S51a, the map image 905 illustrated in FIG. 14 is generated. The map image 905 is an example in which, in the map image 904 illustrated in FIG. 12, a target spot image 31g indicating the first target spot and a travel range image 90g indicating the travelable range calculated for each of the first target spots are hidden, and a destination image 89 indicating the destination of the moving body 1 is further displayed in a superimposed manner.

As described above, according to the sixth embodiment, the user of the moving body 1 can easily determine the charging spot 30 through which the user should pass to reach the destination, with reference to the map image 905.

### (Seventh embodiment)

In the sixth embodiment, each of the one or more charging spots 30 within a range in which the moving body 1 is reachable from the current location are set as target spots, and the first target spot for which the travelable range not including the destination of the moving body 1 is calculated and the travelable range are hidden. In the seventh embodiment, the number of the batteries 11 is displayed. These batteries 11 can cause the moving body 1 to travel to the destination among the batteries 11 being charged at each target spot for which the travelable range including the destination of the moving body 1 is calculated. Hereinafter, the seventh embodiment will be described in detail. Note that in the seventh embodiment, the same components as those in the sixth embodiment are denoted by the same reference numerals, and description thereof will be omitted.

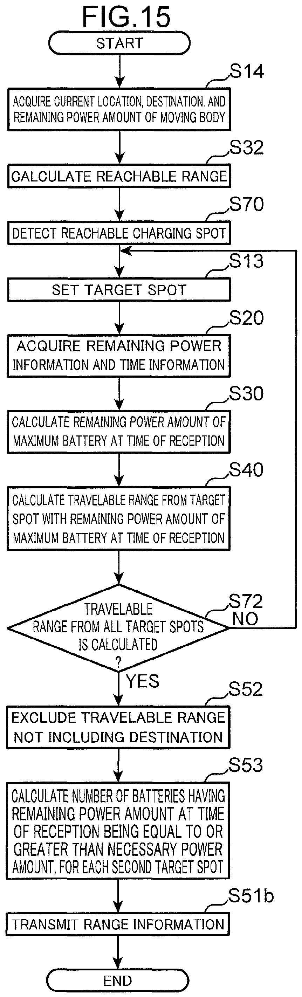

FIG. 15 is a flowchart illustrating one example of processing of the server 2 according to the seventh embodiment. In the seventh embodiment, when the communication unit 21 receives the request information, the processor 20 starts the processing illustrated in FIG. 15. After start of the processing illustrated in FIG. 15, as in the sixth embodiment, when the processing in step S14 to step S52 is performed, step S53 is performed.

In step S53, the output unit 204 calculates, for each of the one or more target spots (hereinafter, second target spots (second charging spots)) for which the travelable range including the destination acquired in step S14 is calculated in step S40, the number of the batteries 11 having the remaining power amount at a time of reception battery each second target spot being equal to or more than the power amount necessary for traveling of the moving body 1 from each second target spot to the destination.

Specifically, in step S53, the output unit 204 refers to the remaining power amount information and the time information acquired in step S20 for each second target spot. The remaining power amount information about each second target spot is information indicating the remaining power amount of the one or more batteries 11 being charged at each second target spot. The time information about each second target spot is information indicating a time required for the moving body 1 to receive the battery 11 at each second target spot.

Then, the output unit 204 calculates the remaining power amount of each battery 11 at a time the moving body 1 receives each battery 11 at each second target spot, for each of the one or more batteries 11 being charged at each second target spot, based on the remaining power amount information and the time information about each second target spot, as in step S30 (FIG. 3). Then, the output unit 204 calculates the number of the batteries 11 having the remaining power amount at the time of reception at each second target spot being equal to or greater than the power amount necessary for traveling of the moving body 1 from each second target spot to the destination.

Note that the output unit 204 calculates the power amount necessary for traveling of the moving body 1 from each second target spot to the destination, for example, as follows. The output unit 204 acquires a traveling range calculation model stored in the model storage unit 223. The output unit 204, the calculation unit 202 calculates a geographical feature amount between each of the second target spots and the destination based on the map information stored in the map information storage unit 221. The output unit 204 inputs the calculated geographic feature amounts to the traveling range calculation model. As a result, the output unit 204 calculates the amount of power output from the traveling range calculation model as the power amount necessary for traveling of the moving body 1 from each second target spot to the destination.

However, the method for calculating the power amount necessary for traveling of the moving body 1 from each second target spot to the destination using the output unit 204 is not limited to the above example. For example, the output unit 204 may calculate a linear distance between each second target spot and the destination, based on the map information stored in the map information storage unit 221. Then, the output unit 204 may calculate a result of dividing the straight line distance by a predetermined traveling distance per unit power amount of the moving body 1, as the power amount necessary for the traveling of the moving body 1 from each second target spot to the destination.

Next, in step S51b, the output unit 204 performs processing similar to that in step S51a (FIG. 13). However, in, the output unit 204 further superimposes information indicating the number of the batteries 11 calculated in step S53 for each second target spot on the map image 905 (FIG. 14) generated as the range information in association with each second target spot.

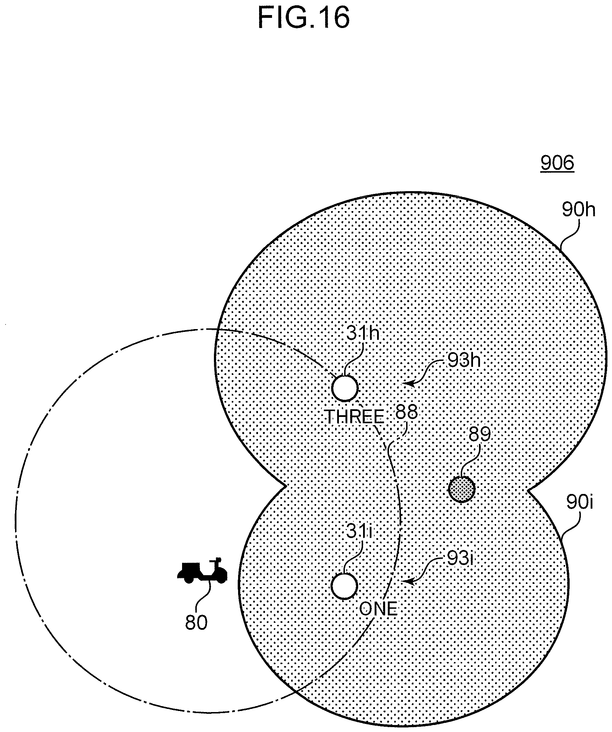

FIG. 16 is a view illustrating one example of a map image 906 according to the seventh embodiment. For example, in step S51b, the map image 906 illustrated in FIG. 16 is generated. The map image 906 is an example in which information 93h indicating the number "THREE" of the batteries 11 calculated for each second target spot is superimposed to be displayed on the map image 905 illustrated in FIG. 14 in association with the target spot image 31h indicating the second target spot. In association with a target spot image 31i indicating another second target spot, information 93i indicating the number "ONE" of the batterie 11 calculated for the second target spot is further superimposed to be displayed on the map image 906.

According to the seventh embodiment, the user of the moving body 1 can easily determine which second target spot the user visits in order to easily receive the battery 11 for reaching the destination, with reference to the map image 906.

### (Eighth embodiment)

In the sixth embodiment, the range in which the moving body 1 is travelable from each second target spot with the remaining power amount of the maximum battery at the time of receiving the maximum battery at each second target spot and the current location of the moving body 1 are displayed. In the eighth embodiment, a destination of the moving body 1 and a traveling route from a current location to the destination are further displayed. Hereinafter, the eighth embodiment will be described in detail. Note that in the eighth embodiment, the same components as those in the sixth embodiment are denoted by the same reference numerals, and description thereof will be omitted.

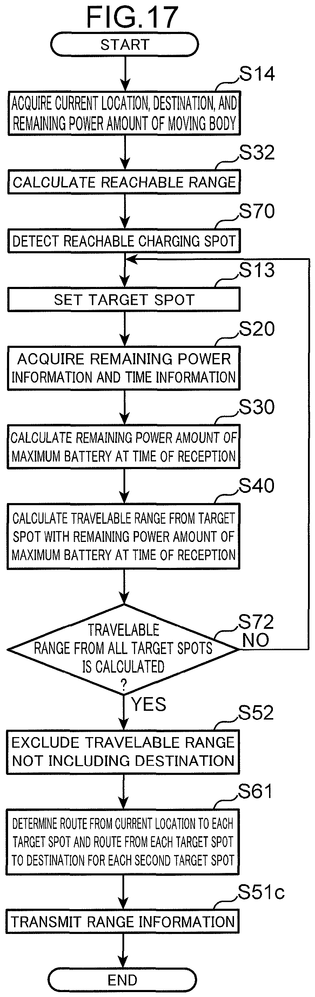

FIG. 17 is a flowchart illustrating an example of processing of the server 2 according to the eighth embodiment. In the eighth embodiment, when the communication unit 21 receives request information, the processor 20 starts the processing illustrated in FIG. 17. After start of the processing illustrated in FIG. 17, as in the sixth embodiment, when the processing in step S14 to step S52 is performed, step S61 is performed.

In step S61, the determination unit 203 determines a route (third route) from the current location acquired in step S14 to each second target spot and a route (fourth route) from each second target spot to the destination acquired in step S14, as in step S60 (FIG. 5) described in the second embodiment.

Next, in step S51c, the output unit 204 performs processing similar to that in step S51a (FIG. 13). However, the output unit 204 further superimposes an image indicating the route determined in step S61 on a position corresponding to the route determined in step S61 in the map image 905 (FIG. 14) generated as the range information.

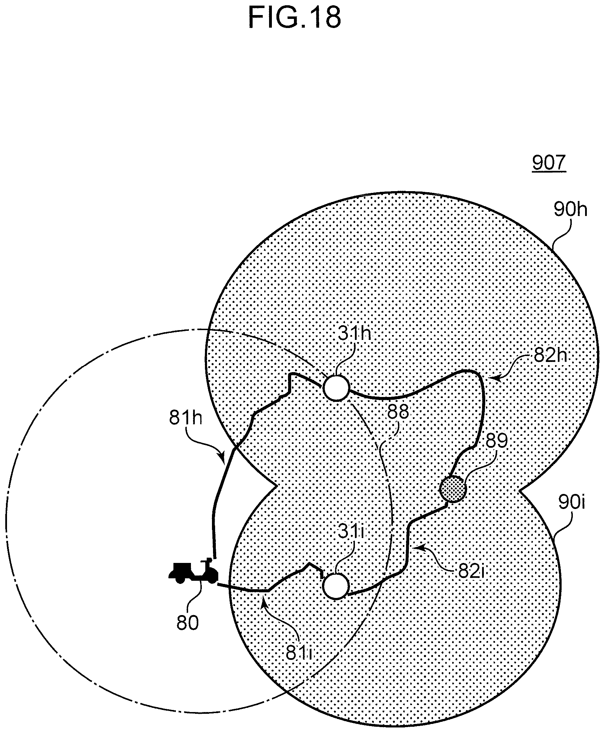

FIG. 18 is a view illustrating one example of a map image 907 according to the eighth embodiment. For example, in step S51c, the map image 907 illustrated in FIG. 18 is generated. The map image 907 is an example in which an image 81h indicating a route from the current location to the second target spot and an image 82h indicating a route from the second target spot to the destination are displayed in a superimposed manner in the map image 905 illustrated in FIG. 14. In the map image 907, an image 81i indicating a route from the current location to another second target spot and an image 82i indicating a route from the second target spot to the destination are further displayed in a superimposed manner.

As described above, according to the eighth embodiment, the user of the moving body 1 can easily grasp a route from the current location to the destination via each second target spot, with reference to the map image 907.

### (Ninth embodiment)

In the sixth embodiment, each of the one or more charging spots 30 within a range in which the moving body 1 is reachable from the current location are set as target spots, and the first target spot for which the travelable range not including the destination of the moving body 1 is calculated and the travelable range are hidden. In the ninth embodiment, the time required for the maximum battery received by the moving body 1 at each first target spot to be charged until the maximum battery reaches the remaining power amount with which traveling to the destination is enabled displayed as the standby time at each first target spot. Furthermore, in the ninth embodiment, a route for traveling from the current location to the destination via each target spot is displayed. Hereinafter, the ninth embodiment will be described in detail. Note that in the ninth embodiment, the same components as those in the sixth embodiment are denoted by the same reference numerals, and description thereof will be omitted.

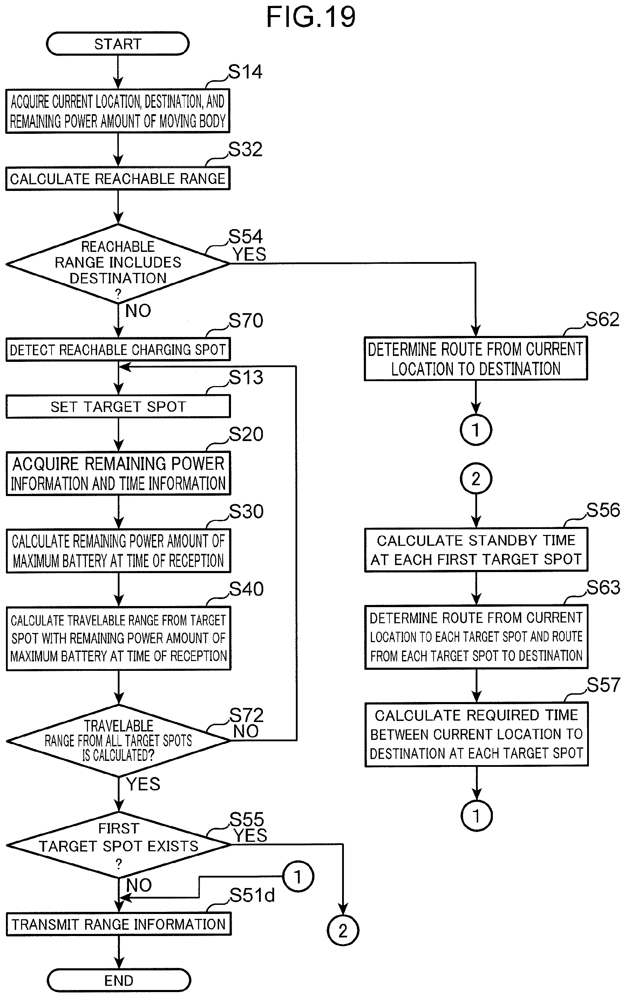

FIG. 19 is a flowchart illustrating an example of processing of the server 2 according to the ninth embodiment. In the ninth embodiment, when the communication unit 21 receives request information, the processor 20 starts the processing illustrated in FIG. 19. After start of the processing illustrated in FIG. 19, as in the sixth embodiment, when the processing in step S14 and step S32 is performed, step S54 is performed.

In step S54, the output unit 204 determines whether the destination of the moving body 1 acquired in step S14 is included in the range where the moving body 1, the range being calculated in step S32, is reachable from the current location.

In a case where the destination of the moving body 1 is determined in step S54 to be included (YES in step S54), step S62 is performed. In step S62, the determination unit 203 determines a route from the current location acquired in step S14 to the destination, as in step S60 (FIG. 5) described in the second embodiment.

In this case, in step S51d, the output unit 204 generates, as the range information, a map image showing the current location and the destination of the moving body 1 acquired in step S14, the range in which the moving body 1 is reachable from the current location, the range being calculated in step S32, and the route determined in step S62. The output unit 204 transmits the range information to the user terminal 6. The user terminal 6 displays the map image, which is the range information returned from the server 2, on the display.

On the other hand, when the destination of the moving body 1 is determined in step S54 not to be included (NO in step S54), the processing in and after step S70 is performed as in the sixth embodiment. Thereafter, all the charging spots 30 detected in step S70 are set as target spots, and the processing in step S55 is performed when the calculation of the travelable range is completed for all the target spots (YES in step S72).

In step S55, the output unit 204 determines whether one or more first target spots for which the travelable range not including the destination is calculated in step S40 exist among the one or more target spots set in step S13.

When the one or more first target spots are determined to exist in step S54 (YES in step S54), the output unit 204 performs step S56. In step S56, for each of the one or more first target spots, the output unit 204 calculates, as the standby time at each first target spot, the time until the remaining power amount of the maximum battery at each first target spot reaches the power amount necessary for the traveling of the moving body 1 from each first charging spot to the destination.

Specifically, in step S56, the output unit 204 calculates the power amount necessary for traveling of the moving body 1 from each first target spot to the destination, as in step S53 (FIG. 15) of the seventh embodiment. The output unit 204 calculates, as the standby time at each first target spot, the time required for charging until the remaining power amount of the maximum battery reaches the calculated necessary power amount from the remaining power amount calculated in step S30 at each first target spot, with reference to the charging profile stored in the charging information storage unit 222.

Next, in step S63, the determination unit 203 determines a route (fifth route) from the current location acquired in step S14 to each target spot and a route (sixth route) from each target spot to the destination acquired in step S14 for each of the one or more target spots set in step S13, as in step S60 (FIG. 5) described in the second embodiment.

Next, in step S57, the output unit 204 calculates, for each of the one or more target spots set in step S13, the time required for the moving body 1 to travel from the current location to the destination via each target spot (hereinafter, required time) in consideration of the standby time, calculated in step S56, at each target spot.

Specifically, in step S57, the output unit 204 calculates the distance of the route from the current location to the destination via each target spot, the route being determined in step S63, with reference to the map information stored in the map information storage unit 221. The output unit 204 calculates a result of dividing the distance by a predetermined average traveling speed of the moving body 1 as the required time. Note that the method for calculating the required time is not limited thereto, and other publicly-known calculation methods may be applied. The output unit 204 further adds the standby time, calculated in step S56, at each first target spot to the required time required for the moving body 1 to travel from the current location to the destination via each first target spot.

In a case where the output unit 204 performs step S57 or determines in step S54 that the one or more first target spots do not exist (NO in step S54), the output unit performs step S51d.

In these cases, in step S51d, the output unit 204 performs processing similar to that in step S51a (FIG. 13) of the sixth embodiment. However, the output unit 204 further superimposes an image indicating the route determined in step S63 and information indicating the required time calculated in step S57 on a position corresponding to the route determined in step S63 in the map image generated as the range information. Further, the output unit 204 further superimposes the information indicating the standby time, calculated in step S56, at each first target spot on the map image in association with each first target spot.

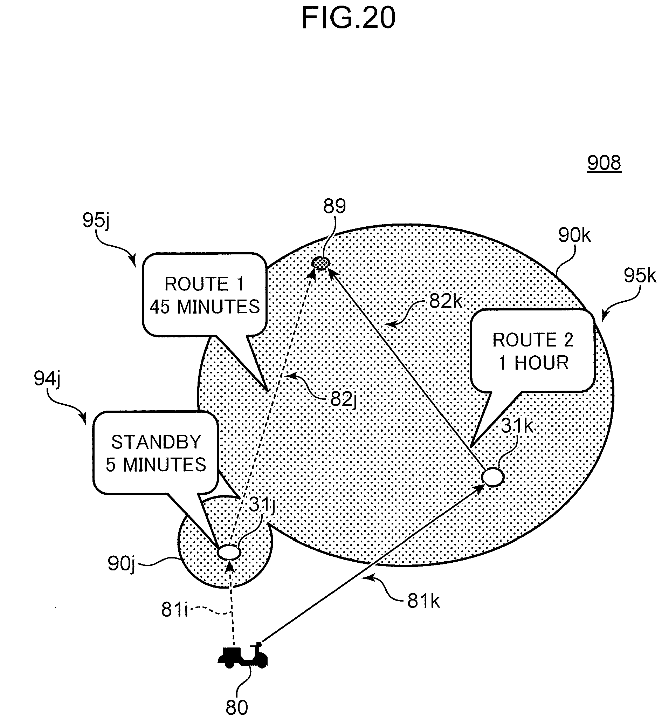

FIG. 20 is a view illustrating one example of a map image 908 according to the ninth embodiment. For example, in step S51d in a case where step S57 is performed, the map image 908 illustrated in FIG. 20 is generated.

The map image 908 is an example in which an image 81j indicating a route from the current location to the first target spot, an image 82j indicating a route from the first target spot to the destination, and information 95j indicating the time "45 MINUTES" required for the moving body 1 to travel from the current location to the destination via the first target spot are superimposed to be displayed on a map image generated by processing as in step S51a (FIG. 13) of the sixth embodiment. Information 94j indicating the standby time "5 MINUTES" at the first target spot is further superimposed to be displayed on the map image 908 is associated with the first target spot.

In addition, an image 81k indicating a route from the current location to a second target spot, an image 82k indicating a route from the second target spot to the destination, and information 95k indicating a time "1 HOUR" required for the moving body 1 to travel from the current location to the destination via the second target spot are further superimposed to be displayed on the map image 908.

As described above, according to the ninth embodiment, the user of the moving body 1 can easily determine which route to use and via which charging spot 30 to visit for reaching the destination, and how long and at which charging spot 30 to wait, with reference to the map image 908. Further, the user can easily determine which route and via which charging spot 30 the user can reach the destination in the shortest time.

Note that in the ninth embodiment, the calculation unit 202 may calculate in step S30, as the remaining power amount at the time of reception, the remaining power amount of a predetermined battery (hereinafter, predetermined battery) different from the maximum battery at a time the moving body 1 receives the predetermined battery at the target spot based on the remaining power information and the time information acquired in step S20. The predetermined battery may be, for example, the battery 11 having the remaining power amount being minimum or closest to an average value among the one or more batteries 11 being charged at the target spot, or may be the battery 11 randomly selected from the one or more batteries 11. In step S40, then the calculation unit 202 may calculate the range in which the moving body 1 is travelable from the target spot with the remaining power amount at the time of reception calculated in step S30.

In addition, step S54, step S55, and step S62 may be omitted, and when the calculation in step S72 of the travelable range is completed for all the target spots detected in step S70 (YES in step S72), step S56, step S63, and step S57 may be performed for each target spot detected in step S70, and step S51d may be performed.

Further, in the ninth embodiment, step S57 may be omitted, and in step S51d, the output unit 204 may not superimpose the information indicating the required time on the map image.

In addition, in the ninth embodiment, without omitting step S57, in step S51d, the output unit 204 may hide the route determined for the target spot different from the target spot for which the shortest required time is calculated, and the standby time and the required time calculated for the different target spot, on the generated map image.

For example, the output unit 204 is assumed to generate the map image 908 illustrated in FIG. 20 in step S51d. In this case, the output unit 204 may hide the images 81k and 82k indicating the routs determined for the target spot different from the target spot for which the shortest required time is calculated, and the information 95k indicating the required time "1 hour" calculated for the target spot.

As a result, the output unit 204 may superimpose to display the images 81i and 82j indicating the routes determined for the target spot for which the shortest required time is calculated, the information 94j indicating the standby time "5 minutes" calculated for the target spot, and the information 82j indicating the required time" 45 minutes" calculated for the target spot on the map image generated in processing similar to that in step S51a (FIG. 13) of the sixth embodiment in association with the image 31j indicating the target spot.

In this case, the user of the electric moving body can easily determine that the user can reach the destination in the shortest time by traveling along the route displayed on the map image via the target spot displayed on the map image with reference to the map image.

Note that the output unit 204 may display the image 31j indicating the target spot for which the shortest required time is calculated and at least one of the two images 81i and 82j indicating the routes determined for the target spot on the map image generated in processing similar to that in step S51a (FIG. 13) of the sixth embodiment.

### (Tenth embodiment)

In the sixth embodiment, the first target spot for which the travelable range not including the destination of the moving body 1 is calculated and the travelable range are hidden. In a tenth embodiment, until the travelable range including the destination of the moving body 1 is calculated, calculation of the travelable range for each target spot is recursively repeated using each of one or more charging spots 30 that can be reached by the moving body 1 from one first target spot as a target spot. Furthermore, in the tenth embodiment, a route for traveling from a current location to the destination via or without via each of the one or more target spots is displayed. Hereinafter, the tenth embodiment will be described in detail. Note that in the tenth embodiment, the same components as those in the sixth embodiment are denoted by the same reference numerals, and description thereof will be omitted.

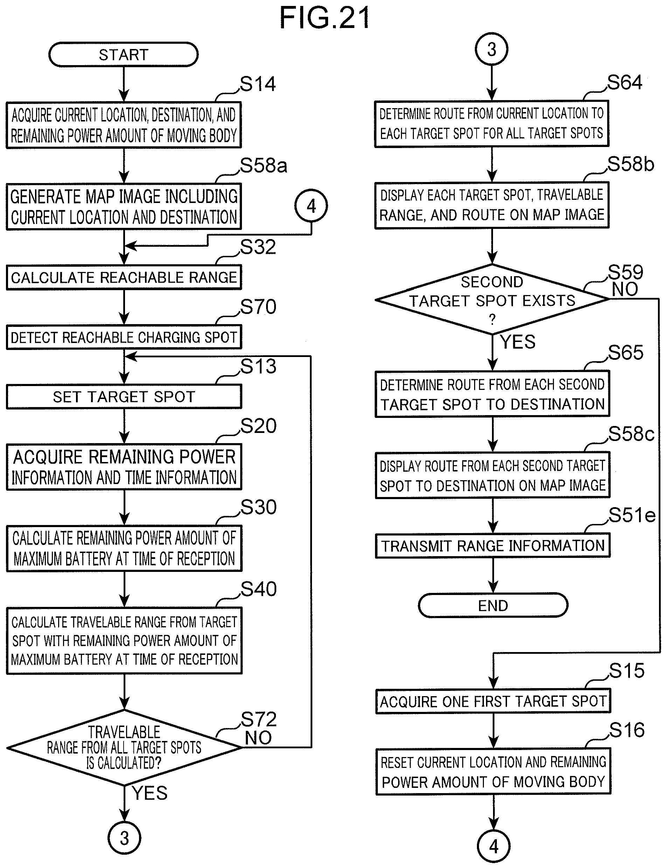

FIG. 21 is a flowchart illustrating one example of processing of the server 2 according to the tenth embodiment. In the tenth embodiment, when the communication unit 21 receives request information, the processor 20 starts the processing illustrated in FIG. 21. When step S14 is performed after the start of the processing illustrated in FIG. 21, step S58a is performed.

In step S58a, the output unit 204 generates a map image including the current location and the destination of the moving body 1 acquired in step S14. Specifically, the output unit 204 acquires the map image including the current location and destination of the moving body 1 from the map information storage unit 221. Hereinafter, the map image that is generated in step S58a and can be processed thereafter is described as the map image.

Thereafter, the processing in and after step S32 is performed, all the charging spots 30 detected in latest step S70 are set as target spots, and step S64 is performed when the calculation of the travelable range is completed for all the target spots (YES in step S72). Hereinafter, the one or more charging spots 30 detected in the latest step S70 and set as target spots are described as all the target spots.

In step S64, the determination unit 203 determines a route (seventh route) from the current location of the moving body 1 to each target spot for each of all the target spots as in step S60 (FIG. 5) described in the second embodiment. Note that, in step S64 that is performed for the first time after the start of the processing illustrated in FIG. 21, the current location of the moving body 1 is acquired in step S14. In another step S64, the current location of the moving body 1 is reset in step S16 described later.

Next, in step S58b, for each of all the target spots, the output unit 204 superimposes an image indicating each target spot, an image indicating the travelable range calculated in step S40 for each target base, and an image indicating a route from the current location of the moving body 1 calculated in step S64 to each target spot on the map image, as in step S51c (FIG. 17).

Next, in step S59, the output unit 204 determines whether one or more second target spots for which the travelable range including the destination of the moving body 1 is calculated in step S40 exist among all the target spots. Note that the destination of the moving body 1 has been acquired in step S14.

In a case where in step S59 the one or more second target spots are determined not to exist (NO in step S59), step S15 is performed.

In step S15, the acquisition unit 201 acquires one first target spot from the one or more first target spots for which the travelable range not including the destination of the moving body 1 is calculated in step S40 among all the target spots.

For example, in step S15, the acquisition unit 201 acquires, as one first target spot, a first target spot having a shorter distance to the destination than a distance to the current location of the moving body 1, the distance being shortest, among the one or more first target spots for which the travelable range not including the destination of the moving body 1 is calculated in step S40. Note that the method with which the acquisition unit 201 acquires one first target spot in step S15 is not limited thereto, and for example, one first target spot may be randomly acquired.

Next, in step S16, the acquisition unit 201 resets the one first target spot acquired in step S15 as the current location of the moving body 1. In accordance with this, the acquisition unit 201 resets the information indicating the remaining power amount of the maximum battery at a time the moving body 1 receives the maximum battery at the one target spot, the remaining power amount being calculated in step S30, as the information indicating the remaining power amount of the battery mounted on the moving body 1. After Step S16, the processing in and after step S32 is performed. As a result, it is assumed that the moving body 1 have moved to one target spot and the battery of the moving body 1 has been replaced with the maximum battery, and the processing in and after step S32 is performed.

On the other hand, in a case where in step S59 the one or more second target spots are determined to exist (YES in step S59), step S65 is performed.

In step S65, the determination unit 203 determines a route (eighth route) from each second target spot to the destination of the moving body 1 for each of the one or more second target spots determined to exist in the latest step S59, as in step S60 (FIG. 5) described in the second embodiment.

Next, in step S58c, the output unit 204 superimposes an image indicating a route from each of the second target spots, the route being determined in step S65, to the destination of the moving body 1 on the map image, as in step S51c (FIG. 17).

Next, in step S51e, the output unit 204 transmits the map image as range information to the user terminal 6.

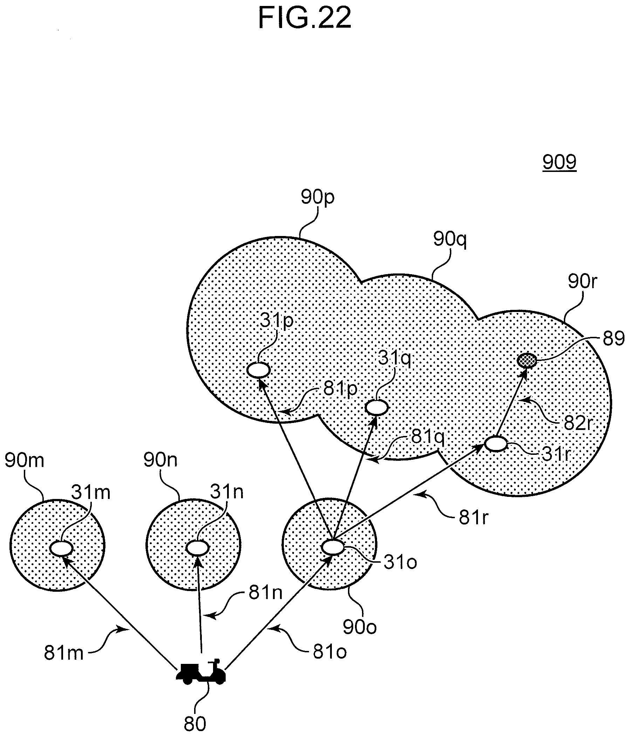

FIG. 22 is a view illustrating one example of a map image 909 according to the tenth embodiment. For example, in step S51e, the map image 909 illustrated in FIG. 22 is generated. The map image 909 is an example in which the current location image 80 indicating the current location of the moving body 1 and the destination image 89 indicating the destination of the moving body 1 are displayed in a superimposed manner.

The map image 909 further shows images 31m, 31n, and 31o respectively indicating three first target spots that can be reached from the current location of the moving body 1, images 90m, 90n, and 90o respectively indicating the travelable ranges calculated for the three first target spots, and images 81m, 81n, and 81o respectively indicating routes from the current location of the moving body 1 to the three first target spots in a superimposed manner.

The map image 909 further shows images 31p and 31q respectively indicating two first target spots after the first target spot indicated by the image 31o is reset as the current location of the moving body 1, images 90p and 90q respectively indicating the travelable ranges calculated for the two first target spots, and images 81p and 81q indicating routes from the current location of the moving body 1 to the two first target spots in a superimposed manner.

The map image 909 further shows an image 31r indicating a second target spot after the first target spot indicated by the image 31o is reset as the current location of the moving body 1, an image 90r indicating the travelable range calculated for the second target spot, and an image 82r indicating a route from the reset current location of the moving body 1 to the destination of the moving body 1 in a superimposed manner.

As described above, according to the twenty-second embodiment, the user of the moving body 1 can easily grasp a route for traveling from the current location to the second target spot indicated by the image 31r via the first target spot indicated by the image 31o and then traveling from the second target spot to the destination with reference to the map image 909.

Note that, in step S15, in a case where there is a plurality of first target spots for which the travelable range not including the destination of the moving body 1 is calculated in step S40 among all the target spots, the acquisition unit 201 may acquire two or more first target spots having a shorter distance to the destination than a distance to the moving body 1 from the plurality of first target spots. Then, the processing in and after step S16 may be performed for each of the two or more first target spots. However, the method with which the acquisition unit 201 acquires the two or more first target spots from the plurality of first target spots is not limited to the above, and for example, the two or more first target spots may be randomly acquired.

### (Modification)

The above embodiments has described a mode in which the one or more batteries 11 available in the moving body 1 are charged at the charging spot 30, but the present disclosure can also be applied to a mode in which one or more replacement moving bodies 1 are charged at the charging spot 30.

That is, the processor 20 may acquire remaining power information indicating the remaining power amount of the moving body 1 (first electric moving body) being charged at the charging spot 30 and time information indicating the time required for the moving body 1 (second electric moving body) being used by the user to be replaced at the charging spot 30. Then, the processor 20 may calculate a range in which the moving body 1 replaced with the moving body 1 being used by the user at the charging spot 30 is travelable from the charging spot 30, based on the remaining power information and the time information, and output range information indicating the travelable range.

Further, for example, information (hereinafter, vehicle information) indicating the feature amount of the moving body 1, such as the type (vehicle type), model number, weight, and size of the moving body 1, may be stored in advance in the memory 22 of the server 2. Accordingly, the calculation unit 202 may calculate the travelable range with higher accuracy in consideration of the feature amount of the moving body 1 indicated by the vehicle information, with reference to the vehicle information stored in the memory 22 in steps S32, S40, S41, and S42.

For example, it is considered that the larger the weight and size of the vehicle, the faster the power of the battery 11 is consumed by the vehicle. Therefore, the calculation unit 202 may correct the travelable range calculated as described in the above embodiments to be smaller as the weight or size indicated by the vehicle information is greater. Similarly, the calculation unit 202 may correct the travelable range calculated as described in the above embodiments to be smaller as the weight or size of the vehicle corresponding to the vehicle type and/or the model number indicated by the vehicle information is greater.

### Industrial Applicability

According to the present disclosure, it is possible to output the travelable range with the remaining power amount of the battery when the electric moving body receives the battery being charged at the charging spot, which is useful in promoting the use of the electric moving body having a short cruising distance.

## Claims

1. An information processing method comprising, by a processor:
acquiring remaining power information indicating a remaining power amount of a first battery being charged at a charging spot and time information indicating a time required for an electric moving body to receive the first battery at the charging spot,
calculating a travelable range in which the electric moving body is travelable from the charging spot with the remaining power amount of the first battery at a time of reception of the first battery at the charging spot, based on the remaining power information and the time information, and
outputting range information indicating the travelable range.

2. The information processing method according to claim 1, wherein
in the acquiring, information indicating a current location and a destination of the electric moving body is further acquired, and
the range information includes a map image showing the charging spot, the travelable range, the current location, and the destination.

3. The information processing method according to claim 2, further comprising:
determining a first route from the current location to the charging spot and a second route from the charging spot to the destination,
wherein the map image further shows the first route and the second route.

4. The information processing method according to any one of claims 1 to 3, wherein
the first battery includes one or more batteries, and
in the calculating, the travelable range in a case where the electric moving body receives at least a battery having a maximum remaining power amount among the one or more batteries is calculated.

5. The information processing method according to claim 1, wherein
in the acquiring, information indicating a remaining power amount of a second battery mounted on the electric moving body and a current location of the electric moving body is further acquired,
the method further comprises:
detecting one or more charging spots where the electric moving body is reachable from the current location, based on the remaining power amount of the second battery and the current location; and
acquiring the remaining power information and the time information and calculating the travelable range, for each of the one or more charging spots, and
the range information includes a map image showing the one or more charging spots, the travelable range calculated for each of the charging spots, and the current location.

6. The information processing method according to claim 5, wherein
in the calculating, a range in which the electric moving body is reachable from the current location is further calculated based on the remaining power amount of the second battery and the current location, and
the map image further shows the range in which the electric moving body is reachable from the current location.

7. The information processing method according to claim 5, wherein
in the acquiring, information indicating a destination of the electric moving body is further acquired, and
the map image does not show one or more first charging spots for which the travelable range not including the destination is calculated, and the travelable range calculated for each of the first charging spots.

8. The information processing method according to any one of claims 5 to 7, wherein
the first battery includes one or more batteries,
in the acquiring, information indicating a destination of the electric moving body is further acquired,
the method further comprises:
calculating, for each of one or more second charging spots for which the travelable range including the destination is calculated, a number of the batteries having a remaining power amount at a time of reception at each of the second charging spots being equal to or greater than a power amount necessary for traveling of the electric moving body from each of the second charging spots to the destination, based on the remaining power information and the time information acquired for each of the second charging spots, and
the map image further shows the calculated number for each of the second charging spots in association with each of the second charging spots.

9. The information processing method according to any one of claims 5 to 7, wherein
in the acquiring, information indicating a destination of the electric moving body is further acquired,
the method further comprises:
determining a third route from the current location to each of the second charging spots and a fourth route from each of the second charging spots to the destination for each of the one or more second charging spots for which the travelable range including the destination is calculated, and
the map image further shows the third route and the fourth route determined for each of the second charging spots.

10. The information processing method according to claim 5, wherein
the first battery includes one or more batteries,
in the acquiring, information indicating a destination of the electric moving body is further acquired,
the method further comprises:
calculating, for each of the one or more charging spots, a standby time between a time the electric moving body reaches each of the charging spots and a time the remaining power amount of at least one of the one or more batteries becomes a power amount necessary for the electric moving body to travel from each of the charging spots to the destination, based on the remaining power information and the time information acquired for each of the charging spots, and
the map image shows the standby time calculated for each of the charging spots.

11. The information processing method according to claim 10, further comprising:
determining a fifth route from the current location to each of the charging spots and a sixth route from each of the charging spots to the destination for each of the one or more charging spots, and calculating a required time required for the electric moving body to travel from the current location to the destination in consideration of the standby time calculated for each of the charging spots,
wherein the map image further shows the required time calculated for each of the charging spots.

12. The information processing method according to claim 11, wherein the map image shows at least one of a charging spot for which a shortest required time of the required time calculated for each of the one or more charging spots is calculated, and the fifth route and sixth route determined for each of the charging spots.

13. The information processing method according to claim 1, wherein
the first battery includes one or more batteries,
in the acquiring, information indicating a remaining power amount of a second battery mounted on the electric moving body and a current location and a destination of the electric moving body is further acquired,
in the calculating, the travelable range in a case where the electric moving body receives a third battery having a maximum remaining power amount among the one or more batteries is calculated,
the method further comprises:
generating a map image showing the current location and the destination;
(1) detecting one or more charging spots where the electric moving body is reachable from the current location, based on the remaining power amount of the second battery and the current location;
(2) acquiring the remaining power information and the time information and calculating the travelable range for each of the one or more charging spots;
(3) determining, for each of the one or more charging spots, a seventh route from the current location to each of the charging spots;
(4) displaying each of the charging spots, the travelable range calculated for each of the charging spots, and the seventh route determined for each of the charging spots, on the map image;
(5) determining, in a case where the travelable range including the destination is calculated in the processing (2), an eighth route from each of one or more second charging spots for which the travelable range including the destination is calculated to the destination, displaying the eighth route determined for each of the second charging spots on the map image, and outputting the map image as the range information; and
(6) sequentially executing the processing (1) and the subsequent processing in a case where the travelable range including the destination is not calculated in the processing (2), for at least one of the one or more charging spots, with a remaining power amount of the third battery at a time the electric moving body receives the third battery at the at least one of the charging spots being a remaining power amount of the second battery and the at least one of the charging spots being the current location.

14. The information processing method according to claim 13, wherein the at least one charging spot is a charging spot, having a shorter distance to the destination than a distance to the electric moving body, among the one or more charging spots.

15. The information processing method according to claim 1, further comprising:
calculating, for each of one or more predetermined times, the travelable range in a case where the electric moving body receives the first battery after each predetermined time has elapsed, based on the remaining power information and the time information,
wherein the range information includes a map image showing the charging spot and the travelable range, and showing each of the predetermined times and the travelable range calculated for each of the predetermined times in association with each other.

16. The information processing method according to claim 1, wherein
the first battery includes a plurality of batteries,
in the calculating, for each of the plurality of batteries, a travelable range from the charging spot is calculated with a remaining power amount of each of the plurality of batteries at a time the electric moving body receives each of the plurality of batteries at the charging spot, and
the range information includes a map image showing the charging spot, the travelable range calculated for each of the plurality of batteries, and identification information about each of the plurality of batteries.

17. An information processing method comprising, by a processor,:
acquiring remaining power information indicating a remaining power amount of a first electric moving body being charged at a charging spot and time information indicating a time required for a second electric moving body to be replaced at the charging spot;
calculating a travelable range in which the first electric moving body replaced with the second electric moving body at the charging spot is travelable from the charging spot, based on the remaining power information and the time information; and
outputting range information indicating the travelable range.

18. An information processing device comprising:
an acquisition unit that acquires remaining power information indicating a remaining power amount of a first battery being charged at a charging spot and time information indicating a time required for an electric moving body to receive the first battery at the charging spot;
a calculation unit that calculates a travelable range in which the electric moving body is travelable from the charging spot with the remaining power amount of the first battery at a time of reception of the first battery at the charging spot, based on the remaining power information and the time information; and
an output unit that outputs range information indicating the travelable range.

19. A control program causing a processor to function as:
an acquisition unit that acquires remaining power information indicating a remaining power amount of a first battery being charged at a charging spot and time information indicating a time required for an electric moving body to receive the first battery at the charging spot;
a calculation unit that calculates a travelable range in which the electric moving body is travelable from the charging spot with the remaining power amount of the first battery at a time of reception of the first battery at the charging spot, based on the remaining power information and the time information; and
an output unit that outputs range information indicating the travelable range.
